# EUROPÄISCHE PATENTSCHRIFT

(11) **EP 1 212 496 B1**
(45) Veröffentlichungstag und Bekanntmachung des Hinweises auf die Patenterteilung: **04.06.2003**
(21) Anmeldenummer: 00974297.4
(22) Anmeldetag: 08.09.2000
(51) Int. Cl.: E04D 3/35, E04D 3/30, E04D 13/16, E04D 3/36, E04B 9/18, F16L 3/24, H02G 3/30, F16B 37/04, E04C 2/32

(54) **DACH- UND DECKENSYSTEM FÜR FLACHDACHGEBÄUDE**
ROOF AND FLOOR SYSTEM FOR FLAT ROOF BUILDINGS
SYSTEME DE TOITURE ET DE COUVERTURE POUR BATIMENTS A TOITS PLATS

(30) Priorität: 13.09.1999 DE 29915988 U; 13.09.1999 DE 29915830 U; 02.12.1999 DE 19958208; 04.05.2000 DE 20008065 U
(43) Veröffentlichungstag der Anmeldung: 12.06.2002
(73) Patentinhaber: Harald Zahn GmbH, 69168 Wiesloch (DE)
(72) Erfinder: ZAHN, Harald, 69168 Wiesloch (DE)
(86) Internationale Anmeldenummer: DE0003102
(87) Internationale Veröffentlichungsnummer: WO01020099

(56) Entgegenhaltungen:
- EP-A- 0 589 115
- DE-A- 1 509 063
- DE-A- 19 530 758
- FR-A- 1 491 552
- FR-A- 1 535 595
- GB-A- 776 607
- GB-A- 822 087
- GB-A- 1 260 133
- GB-A- 1 409 713
- GB-A- 2 192 649
- GB-A- 2 200 670
- GB-A- 2 252 806
- GB-A- 2 263 117
- GB-A- 2 264 126
- US-A- 3 511 463
- US-A- 3 660 482
- US-A- 3 812 636
- US-A- 4 085 558
- US-A- 4 211 047
- US-A- 4 453 349
- US-A- 4 453 364
- US-A- 4 597 234
- US-A- 4 805 855
- "MET DLW-STAALDAKELEMENTEN IS SNELLE MONTAGE MOGELIJK" BOUWWERELD, Bd. 74, Nr. 11, 26. Mai 1978 (1978-05-26), Seiten 94-95, XP002157123

## Beschreibung

Die Erfindung betrifft ein Dach- und Deckensystem für Flachdachgebäude gemäß dem Oberbegriff des Hauptanspruchs.

Aus dem Stand der Technik ist es bekannt Flachdächer, insbesondere solche von Gewerbe- und Industriegebäuden, mit Wärmedämmmaterialien zu belegen und mit Abdichtungsmaterialien aus Kunststoff oder Bitumenbahnen zu überdecken. Das Isolations- und Dämmmaterial sowie die Abdichtungsbahnen werden mit mechanischen Befestigungselementen, die üblicherweise aus jeweils einer Schraube mit Auflageteller oder einem Kunststoffhalter mit angeformten Auflageteller bestehen. auf dem Dach dauerhaft aufgebracht. Auf der Gebäudeinnenseite werden die Deckenelemente z.B. die das Dach bildenden Trapezbleche auch dazu benutzt, um die verschiedensten Konstruktionen abzuhängen. Dies können lnstallationsmaterialien wie z.B. Kabel, Rohre, Kabelkanäle, Beleuchtungen, Beschilderungen, Dekorationen und auch Zwischendecken sein.
Hierfür ist es aus FR-A-1 491 552 und aus US-A-3 660 482 bekannt ein Trapezblech zu verwenden, in das Hinterschneidungen eingeformt sind, die z.B. von Befestigungsmitteln für abzuhängende Decken hintergriffen werden können.

Der im Anspruch 1 angegebenen Erfindung liegt das Problem zu Grunde, dass die Schraube zur Befestigung der Dämm- und Dichtungsmaterialien das Deckenelement, durchbohrt. Bei den das Dämm- und Isoliermaterial fixierenden Befestigungsmitteln ist die Schraube vom Gebäudeinnenraum aus zu sehen und wird meist als unschön und störend empfunden. Unabhängig vom optischen Eindruck können an den Schraubenspitzen Anhaftungen aus Produktionsstäuben, Fasern und der gleichen auftreten. Ein nicht unerheblicher Nachteil der bekannten Befestigungsart liegt dann vor, wenn auf diese Art und Weise Gebäude bearbeitet werden, in deren Produktionsräumen aggressive Dämpfe aufsteigen, dort zwar abgesaugt werden, jedoch mit den Schraubenspitzen in Kontakt kommen. Hier konnten voreilende Korrosionsprozesse festgestellt werden. Gleiches gilt für Schrauben, die die Deckenelemente vom Gebäudeinnenraum her durchdringen. Das Problem der bekannten Dach- und Deckensysteme besteht demnach u.a. im allgemeinen darin, dass jede Durchbohrung oder Durchschneidung der Deckenelemente, insbesondere durch Schrauben sowohl die Korrosionsresistenz des Dachs als auch die Statik der einzelnen Deckenelemente schwächt.

Dieses Problem wird durch die im Anspruch 1 aufgeführten Merkmale gelöst.

Die Erfindung besteht im wesentlichen aus zwei Systemkomponenten. Zum einen ist dies das Deckenelement, das mit Hinterschneidungen, Nasen oder Rückhaltemittel ausgebildet ist und zum anderen das Verriegelungselement, das mit dem Deckenelement schraublos adaptierbar ist, indem es so in das Deckenelement eingesetzt wird, das es die Hinterschneidungen, Nasen oder Rückhaltemittel des Deckenelementes hintergreift. Dazu kann das Verriegelungselement die verschiedensten Formgebungen besitzen. Die Erfindung offenbart Verriegelungselemente die sowohl für die dachinnenseitige als auch für die dachaußenseitige Adaption mit dem Deckenelement einsetzbar sind. Die auf der Gebäudeaußenseite montierten Verriegelungselemente werden zur Erfassung von Dachbauschrauben für die Dämmstoffbefestigung lagegerecht positioniert, während die im Gebäude montierbaren Verriegelungselemente ein Abhängelement bilden, das ebenso Bestandteil des erfindungsgemäßen Dach- und Deckensystems ist Es ist dabei entscheidend, dass das Verriegelungselement Retentionsabschnitte besitzt, die mit den Hinterschneidungen, Nasen oder Rückhaltemittel des Deckenelementes zusammenwirken. Die Retentionsabschnitte können aus separaten oder einstückig mit dem Verriegelungselement ausgebildeten Bauteilen bestehen. Die Verriegelungselemente sind zum Hintergreifen der Hinterschneidungen, Nasen oder Rückhaltemittel des Deckenelementes geeignet und bilden mit diesen einen Formenschluss, so dass ein unbeabsichtigtes Lösen der Verbindung zwischen Deckenelement und Verriegelungselement, z.B. durch vertikal auf das Verriegelungselement wirkende Zugkräfte, nicht möglich ist. Das Hintergreifen der Hinterschneidungen, Nasen oder Rückhaltemittel des Deckenelementes durch die Retentionsabschnitte des Verriegelungselementes kann durch Verdrehen, Verschieben oder Verstellen der Retentionsabschnitte, des Verriegelungselementes selbst oder von Teilen dieses erfolgen. Dabei kann sich das Verriegelungselement, die Retentionsabschnitte oder Teile von diesen Systemkomponenten innerhalb des Deckenelementes verspannen oder verkeilen. Das Verriegelungselement selbst dient dann als Montageteil für die verschiedensten am Dach und an der Decke zu befestigenden Bauelemente. Beim Einsatz eines Deckenelementes z.B. in Form eines erfindungsgemäß vorgeschlagenen Klemm- und Verriegelungsdachprofilblechs, welches im wesentlichen den Profilquerschnitt eines Trapezblechs besitzt, können die Verriegelungselemente in die Hoch- und Tiefsicken des Klemm- und Verriegelungsdachprofilblechs eingesetzt werden. Hierzu sind die Hinterschneidungen, Nasen oder Rückhaltemittel in die Profilflanken des erfindungsgemäßen Klemm- und Verriegelungsdachprofilbleches eingeformt, so dass die Profilwand unter Bildung einer Nische in die Tiefsicke hervorsteht, dort eine Nische bildet und in der Hochsicke als Tasche ausgeformt ist. Die Verriegelungselemente können beispielsweise so ausgebildet sein, dass sie zumindest eine solche Schmalseite besitzen oder so schmal eingestellt werden können, damit das Verriegelungselement zwischen den Rückhaltemitteln hindurch in das Deckenelement eingeführt werden kann. Durch Verdrehen des Verriegelungselementes oder durch verstellen von Teilen dieses oder dessen Retentionselemente, so dass die Längsseiten oder die Retentionselemente quer zur Sicke gestellt werden, können die Hinterschneidungen, Nasen oder Rückhaltemittel des Deckenelementes hintergriffen werden. Das in der Tiefsicke des Klemm- und Verriegelungsdachprofilblechs eingesetzte Verriegelungselement kann durch die Schraube für die Befestigung des Dämm- und Dichtungsmaterials in ansonsten gewohnter Weise erfasst werden. Dabei ergibt sich neben dem Vorteil, dass das Deckenelement nicht mehr angebohrt wird, der weitere Vorteil, dass für das Verriegelungselement ein Material gewählt werden kann, das in Zusammenhang mit einer entsprechend ausgewählten Schraube ideale Auszugswerte aufweist. Das bedeutet, dass die Wahl des Befestigungsmittels nicht mehr vom Material des eingesetzten Deckenelements abhängig ist. Das in der Hochsicke des Klemm- und Verriegelungsdachprofilblechs eingesetzte Verriegelungselement kann entweder als Schraubplatte wie das zur dachaußenseitigen Montage eingesetzte Verriegelungselement benutzt werden, oder das Kopfteil eines Abhängelements bilden, das an seinem freien Ende ein Befestigungsmittel für unterhalb der Gebäudedecke anzuordnende Konstruktionen und Installationen trägt.
Die weiteren mit der Erfindung erzielten Vorteile bestehen insbesondere darin, dass die für die Montage der Dämm- und Dichtungsmaterialien verwendeten Schrauben nicht in das Gebäudeinnere eindringen und es sich somit um eine vom Gebäudeinnenraum aus unsichtbare Verbindung handelt Die Schrauben greifen nicht mehr am Deckenelement an, so dass hier jede spanabtragende Veränderung unterbleibt. Da die von der Gebäudeaußenseite montierten Schrauben nicht in den Gebäudeinnenraum einragen, können auch keine Anhaftungen von Produktionsstäuben oder dergleichen an den Schraubenspitzen mehr auftreten. Für Deckenabhängungen im Gebäudeinnern entfallen in das Dachblech einschneidende Schraubverbindungen völlig, da die vorgeschlagenen Verriegelungselemente, die die eigentliche schraublose Verbindung mit dem Deckenelement bilden, formschlüssig mit dem Deckenenelement verbunden sind. Sowohl das erfindungsgemäße Trapezblech als auch die erfindungsgemäßen Verriegelungselemente können mit den verschiedensten Formgebungen und Querschnitten ausgebildet und zusammen mit den herkömmlichen Befestigungselementen verwendet werden. Sowohl an den erfindungsgemäßen Deckenelementen als auch an den erfindungsgemäß vorgeschlagenen Verriegelungselementen können, sich gegebenenfalls zum Teil ergänzende Rückhaltemittel angeordnet werden, wobei zwischen Rückhaltemittel und Verriegelungselement bevorzugter Weise ein Formschluss gebildet wird. Der geradezu sprunghafte Vorteil gegenüber dem Stand der Technik besteht bei der Erfindung darin, dass Inneninstallationen unterhalb der Decke jederzeit verändert und beliebig versetzt werden können, ohne dass die alte Installation Befestigungsspuren hinterlässt. Unter dem Begriff Trapezblech werden erfindungsgemäß alle statish gleichwertigen Profilelemente verstanden, also auch solche, deren Querschnitt eigentlich von der Trapezform abweichen, im Fachjargon jedoch meist trotzdem als Trapezbleche bezeichnet werden. Durch die Verformung des erfindungsgemäßen Deckenelementes bzw. durch das Einbringen der Hinterschneidungen, Nasen oder Rückhaltemittel wird das Profil zusätzlich versteift und erhält somit statisch allgemein günstigere Eigenschaften. Das erfindungsgemäß vorgeschlagene Verriegelungselement ist mit einfachen Handgriffen in das Deckenelement, z.B. in das Klemm- und Verriegelungsdachprofilblech einzusetzen und zu befestigen. Die Verriegelungselemente, die dachaußenseitig mit dem Deckenelement adaptiert werden, können, wenn es sich z.B. um ein trapezförmiges Profilblech handelt, in die von dort aus zugängliche Tiefsicke des Dachbleches eingeführt werden. Die Dachaußenfläche wird mit einer Vielzahl solcher Verriegelungselemente an den Stellen bestückt, wo später die auf das Flachdach aufgelegten Dämm- und Dichtungsmaterialien befestigt werden sollen. Die Tiefsicken werden in der gleichen Weise wie die Hochsicken geortet, wie dies zuvor auch bei den Verlegungen gemäß dem Stand der Technik vorgenommen wurde. Die Schrauben der Befestigungsmittel für die Dämm- und Dichtungsmaterialien schneiden durch die Konterplatte des erfindungsgemäßen Verriegelungselementes hindurch und ragen unterhalb dieser in die Tiefsicke des Klemm- und Verriegelungsdachprofilbleches ein. Somit ist die Befestigungsschraube vom Gebäudeinneren nicht zu sehen. Dies ist wie bereits geschildert dann von Vorteil, wenn es sich um die Gebäudedecke eines Ausstellungsraumes oder um solche Gebäude handelt in denen z.B. Produktionsstäube auftreten. Hier konnte bei Befestigungen des Standes der Technik festgestellt werden, dass an den in das Gebäudeinnere ragenden Schraubenspitzen Staubanhaftungen auftraten. In Räumen, in denen eine hohe Luftfeuchtigkeit herrscht, musste bei den Befestigungssystemen des Standes der Technik einer voreilenden Korrosion durch entsprechend teure Schraubenbeschichtungen oder durch den Einsatz von Edelstahlschrauben entgegengewirkt werden. Ein Eindringen der Feuchtigkeit in die Dämmung durch die perforierte Decke hindurch konnte nicht verhindert werden. Durch die Erfindung werden diese Probleme allesamt gelöst, da die erfindungsgemäßen Deckenelemente keinen Perforationen für irgendwelche Befestigungselemente mehr ausgesetzt werden müssen.
Ebenso können die erfindungsgemäßen Verriegelungselemente von der Gebäudeinnenseite her schraublos unterhalb der Decke mit dem Dachblech adaptiert werden. Wenn die Installation unterhalb der Decke verändert werden soll. kann das Verriegelungselement gelöst und an einer beliebig anderen Stelle positioniert werden, ohne dass an der ursprünglichen Befestigungsstelle eine Beschädigung des Deckenelements zurück bleibt. Mit der Erfindung werden die Probleme gelöst, die ansonsten bei der Perforation von Dachblechen durch die hierfür erforderlichen Bohrlöcher für Befestigungselemente auftreten. Durch die schraublose Verbindung der Bauteile unterbleibt nicht nur die sonst übliche durch Bohrungen verursachte Beeinträchtigung der Blechstatik sondern wird in Teilbereichen sogar verbessert, da die adaptierten Verriegelungselemente zugleich als Versteifungen der Blechsicken wirken. Durch die Vermeidung der Dachblechperforation können auf die thermischen Übergangswerte keine negativen Einflüsse mehr einwirken. Darüber hinaus wird eine mit der Zunahme der üblichen Bohrlöcher verbundene optische Beeinträchtigung der Deckenunterseite eliminiert.
Für die dachaußenseitige Montage der Verriegelungselemente bedeutet dies, dass die Schraubenlänge für die Dämmstoffbefestigung unverändert bleiben kann. Bei der gebäudeinnenseitigen Montage der Verriegelungselemente bringt dies den Vorteil, dass das Verriegelungselement und Teile des Abhängelements in der Blechsicke verborgen sind oder Teile von Installationen innerhalb der Sicke verlegt werden können.
Ein als Klemmlasche ausgebildetes Verriegelungselement lässt sich ohne Werkzeug in die Tiefsicken des Klemm- und Verriegelungsdachprofilblech einsetzen. Das Verriegelungselement kann per Hand oder mit dem Fuß in die Sicken eingedrückt werden. Insbesondere dann, wenn diese Ausführungsform mit den vorgeschlagenen Retentionsabschnitten in Form von z.B. elastisch federnden Zungen kombiniert wird, ergibt sich eine Art Schnappverbindung. Beim Eindrücken des Verriegelungselementes in die Blechsicke, werden die Zungen zurückgedrängt und schnappen unterhalb der Hinterschneidungen, Nasen oder Rückhaltemittel in ihre Ausgangsstellung zurück und hintergreifen diese.
Bei einer vorteilhaften Ausgestaltung der Erfindung ist vorgesehen, dass das als Klemm- und Verriegelungsdachprofilblech ausgebildete Deckenelement im wesentlichen aus einem Trapezprofilblech mit parallel ausgerichteten Hoch- und Tiefsicken besteht, in dessen Profilflanken die Hinterschneidungen, Nasen oder Rückhaltemittel eingeformt sind und sich in Sickenlängsrichtung erstrecken. Während der Grundgedanke der Erfindung die Anordnung der Hinterschneidungen, Nasen oder Rückhaltemittel an einer allgemein geeigneten Stelle des Deckenelementes vorsieht, wird bei dieser bevorzugten Ausführungsform der Profilhohlraum des Deckenelements in optimaler Weise hierfür ausgenutzt. Die Hinterschneidungen, Nasen oder Rückhaltemittel können dabei durchlaufend oder unterbrochen angeordnet werden.

Bei einer weiteren vorteilhaften Ausgestaltung der Erfindung ist vorgesehen, dass die Hinterschneidungen, Nasen oder Rückhaltemittel im Bereich einer Hochsicke jeweils eine Tasche und im Bereich einer Tiefsicke jeweils eine Nische bilden, wobei jeweils zwei parallel in einer Sicke benachbarte Taschen oder jeweils zwei parallel in einer Sicke benachbarte Nischen ein Rückhaltemittelpaar für mindestens ein in die jeweilige Sicke einsetzbares und dieses Paar hintergreifendes Verriegelungselement bilden. Diese Ausgestaltung hat den Vorteil, dass eine Verformungsstelle zugleich in der einen Sicke ein positiv ausgebildetes Rückhaltemittel und in der benachbarten Sicke ein negativ ausgebildetes Rückhaltemittel bildet Durch die Paarbildung ist ein Verkanten des einzusetzenden Verriegelungselementes nahezu ausgeschlossen. Je nach dem welcher Umformungsprozess gewählt wird, können die Nischen auch in den Hochsicken und die Taschen in den Tiefsicken ausgebildet werden. Auch besteht erfindungsgemäß die Möglichkeit, die Position der Rückhaltemitteln von den Wandseiten zum Blechscheitel zu verlagern.

Bei einer weiteren vorteilhaften Ausgestaltung der Erfindung ist vorgesehen, dass die Hinterschneidungen, Nasen oder Rückhaltemittel nahe des Blechscheitels angeordnet sind.

Bei einer weiteren vorteilhaften Ausgestaltung der Erfindung ist vorgesehen, dass das Verriegelungselement in der Sicke, Nut oder Tasche des als Klemm- und Verriegelungsdachprofilblech oder als Dachbauplatte ausgebildeten Deckenelements verkeilbar oder verspannbar ist. Diese Ausgestaltung umfasst Ausführungsformen der Verriegelungselemente, die gegenüber dem Innenquerschnitt der Sicken oder Nuten des jeweiligen Deckenelementes zumindest teilweise ein Übermaß besitzen, oder durch Verstellung von Verriegelungselementteilen oder dessen Retentionsabschnitte. bzw. durch separate Spannmittel auf ein solches Über- oder Klemmmaß eingestellt werden können. Dies erhöht die Verriegelungssicherheit sprunghaft und wirkt dynamisch auftretenden Kräften auf die Verriegelungselemente vorteilhaft entgegen.

Bei einer weiteren vorteilhaften Ausgestaltung der Erfindung ist vorgesehen, dass das Verriegelungselement in der Sicke, Nut oder Tasche des als Klemm- und Verriegelungsdachprofilblech ausgebildeten Deckenelements verdrehbar ist. Dies ist eine bevorzugte Ausführungsform der Erfindung, bei der das Verriegelungselement z.B. selbst die Hinterschneidungen, Nasen oder Rückhaltemittel des Deckenelementes hintergreift, d.h. dass die Retentionsabschnitte beispielsweise selbst durch die Randabschnitte des Verriegelungselementes gebildet werden. Hierzu ist es allerdings zweckmäßig, dass das Verriegelungselement schmalseitige Randpartien besitzt, die ein Einführen des Verriegelungselementes zwischen den Rückhaltemitteln hindurch in das Deckenelement zulassen, wonach ein Verdrehen des Verriegelungselementes erfolgt, das dann mit seinen längeren Randabschnitten die Rückhaltemittel hintergreifen kann.

Bei einer weiteren vorteilhaften Ausgestaltung der Erfindung ist vorgesehen, dass als Alternative zum verdrehbaren Verriegelungselement dieses in der Sicke, Nut oder Tasche des Klemm- und Verriegelungsdachprofilbleches expandierbar ist Hierunter sind alle Ausführungsformen zu verstehen, deren Größe nach dem Einsetzen in das Deckenelement veränderbar ist, so dass die Rückhaltemittel hintergriffen werden können. Dies bedeutet, dass erfindungsgemäß vorgesehen ist, dass das Verriegelungselement die Hinterschneidungen, Nasen oder Rückhaltemittel des Klemm- und Verriegelungsdachprofilbleches hintergreifbare Retentionsabschnitte besitzt, die gegenüber den Hinterschneidungen, Nasen oder Rückhaltemittel in eine Verriegelungsposition verstell-, verdreh-, verschiebbar oder einklipsbar sind. Dabei kann beispielsweise vorgesehen werden, dass die Retentionsabschnitte einstückig mit dem Verriegelungselement ausgebildet oder separate Teile sind, dass die Retentionsabschnitte an den Stirnseiten des Verriegelungselementes angeordnete Laschen oder Leisten sind oder dass die Retentionsabschnitte als federnd elastische Zungen vorliegen.

Bei einer weiteren vorteilhaften Ausgestaltung der Erfindung ist vorgesehen, dass das Verriegelungselement eine einteilige Platte ist, wobei die Retentionsabschnitte durch die stirnrandseitigen Sektoren der Platte gebildet sind, die durch Verdrehung der Platte oder durch Verstellung der Platte selbst oder Teile dieser gegenüber den Hinterschneidungen, Nasen oder Rückhaltemittel des Klemm- und Verriegelungsdachprofilblechs in eine Sperrstellung positionierbar sind. Diese Ausgestaltung entspricht einer bevorzugten Ausführungsform, bei der das Verriegelungselement mit einfachen Handgriffen in das Deckenelement eingesetzt werden kann.

Bei einer weiteren vorteilhaften Ausgestaltung der Erfindung ist vorgesehen, dass die Platte des Verriegelungselements im wesentlichen rechteckförmig oder oval ausgebildet ist und in das Deckenelement bis über bzw. unterhalb die Hinterschneidungen, Nasen oder Rückhaltemittel eingesetzt und um die eigene Vertikalachse, bis zur Hintergreifung der Hinterschneidungen, Nasen oder Rückhaltemittel mit ihren Retentionsabschnitten oder -mittein verdreht wird, wobei die Platte Schmalseiten und Längsseiten besitzt, und wobei die Schmalseiten kleiner und die Längsseiten größer dimensioniert sind als der lichte Abstand zwischen zwei benachbarten Hinterschneidungen, Nasen oder Rückhaltemittel des Deckenelements. Bei dieser besonders bevorzugten Ausführungsform der Erfindung kann die Platte bzw. das Verriegelungselement nachträglich in das erfindungsgemäße Deckenelement eingesetzt werden, indem es mit seinen Längsseiten zunächst parallel zu den Rückhaltemitteln des Deckenelements ausgerichtet und in dieses eingeführt wird. Wenn die Platte des Verriegelungselements über bzw. unterhalb den Rückhaltemitteln positioniert ist, wird diese um ihre eigene Vertikalachse gedreht, so dass die Platte in der horizontalen Ebene einer Rotationsbewegung unterworfen wird. Dadurch werden die Retentionsabschnitte oder Retentionselemente in eine die Rückhaltemittel des Deckenelements hintergreifende Position gebracht Die Länge der Platte kann dabei gegenüber dem Innenmaß der im Deckenelement gebildeten Nuten oder Taschen bzw. dem Innenmaß der benachbarten Profilflanken mit einem geringen Übermaß gefertigt werden, so dass sich in diesem Bereich eine Klemmwirkung zwischen den Nut- oder Tascheninnenseiten bzw. den Profilflanken und den Stirnflächen der verdrehten Platte einstellt. Hierzu ist es zweckmäßig, dass zwei diagonal benachbarte Eckbereiche der Platte jeweils mit einem Radius und die beiden anderen diagonal benachbarten Eckbereiche jeweils mit einer weitestgehenden spitzen Kante ausgebildet sind. Femer ist es hierbei von Vorteil, wenn die Anordnung der mit Radius und spitzen Kanten ausgebildeten Eckbereiche der Platte so gewählt ist, dass unter Berücksichtigung derer horizontalen Drehrichtung der Platte die zuerst auf eines der Hinterschneidungen, Nasen oder Rückhaltemittel zulaufenden Eckbereiche abgerundet sind. Diese Ausgestaltung hat den Vorteil, dass die Drehbewegung in Verschlussrichtung bis in die Klemmposition ungestört und nahezu reibungsfrei erfolgen kann. Ein weiteres Verdrehen ist durch das Anschlagen der Stirnfläche an die Tascheninnenwand bzw. an die Profilflanken des Deckenelements nicht mehr möglich. Dies ist insbesondere in der Phase wichtig, in der die Befestigungsmittel für die Dämm- und Dichtungsmaterialien oder die Aufhängungen unterhalb der Decke erfolgen und dabei Drehkräfte auf die Platte wirken. Es wird hierbei sichergestellt, dass durch die von den jeweiligen Befestigungs- oder Aufhängungsmittel ausgehenden Kraft- oder Formschlusseinwirkungen, welche auf die Platte übertragen werden, diese nicht weiter verdreht oder verstellt werden kann. Damit ist eine unerwünschte Aufhebung der auf vertikale Zugkräfte ausgerichteten Formschlussverbindung zwischen Platte und den Rückhaltemitteln des Deckenelements nicht möglich. Wird die Länge des Verriegelungselements bzw. dessen Platte etwas kleiner ausgeführt als der Profil- oder Nutenquerschnitt des Deckenelements, so kann anstelle der Verklemmung oder Verkeilung eine Verspannung der Platte vorgenommen werden, in dem ein in die Platte eingedrehtes Distanzstück oder ein gleich geartetes Spannelement jeweils in Form einer Gewindestange, die Platte durchsetzt.

Zweckmäßigerweise ist hierzu vorgesehen, dass zwischen dem Distanzstück bzw. dem Spannelement und der Platte eine Schraubverbindung ausgebildet ist. Dies kann ein auf der Unterseite der Platte angeordneter Gewindestutzen oder ein in der Platte selbst eingeschnittenes Durchgangsgewinde sein. Das Distanzstück bzw. das Spannelement wird mit seinem Gewindeende über die dem Deckenelement nahe Seite der Platte hinaus eingedreht. Dabei übt das eingeschraubte Distanzstück bzw. das entsprechende Spannelement mit seiner Gewindekuppe oder einer darauf aufgesetzten Druckplatte einen Anpressdruck auf die Innenfläche des Dachblechscheitels bzw. der Sickensohle aus, wobei die Platte mit ihren Retentionsmitteln oder Retentionsabschnitten gegen die Unterseite der Rückhaltemittel bzw. gegen die Innenseite des Sickenscheitels des Klemm- und Verriegelungsdachprofilbleches gepresst wird. Diese Funktion kann auch bei den Platten mit Übermaß integriert bzw. mit diesen kombiniert werden, was deren Verriegelungssicherheit sprunghaft erhöht.

Um den Verriegelungselementen eine gewisse Vorspannung zu verleihen, ist bei einer weiteren vorteilhaften Ausgestaltung der Erfindung vorgesehen, dass z.B. die Platte eine von der Planizität abweichende Formgebung besitzt. Dies kann ebenso eine konkave oder konvexe Wölbung als auch eine wellenförmige Ausgestaltung sein. Insbesondere im Zusammenhang mit dem die Platte durchsetzenden Distanzstück bzw. dem Spannelement, wird die Platte der Verriegelungselemente bei der Montage in die entgegengesetzte Biegerichtung gedrückt und dabei deren Spann- und Klemmkraft erhöht. Zur Erhöhung des Biegewiderstandes können auch Versteifungsrippen oder Stege an der Platte angeordnet werden.

Bei einer weiteren vorteilhaften Ausgestaltung der Erfindung ist vorgesehen, dass das Verriegelungselement für die dachinnenseitige Montage das Kopfteil eines Abhängelements bildet, wobei unter dem Verriegelungselement ein sich weitestgehend vertikal erstreckendes Distanzstück angeordnet ist, das an seinem freien Ende ein Befestigungsrnittel für die unterhalb des Klemm- und Verriegelungsdachprofilblechs anzuordnende Konstruktionen und Installationen aufweist. Damit erhält das erfindungsgemäße Verriegelungselement einen multifunktionellen Charakter und rundet das vorgeschlagene System ab. Das Abhängelement kann gemäß der individuellen Situation ausgestaltet werden, wobei das Verriegelungselement als solches unverändert bleibt. Das Abhängelement kann ähnlich einem Baukastensystem strukturiert werden. Insbesondere dann, wenn wie dies bei weiteren vorteilhaften Ausgestaltungen der Erfindung vorgesehen ist, das Abhängelement mehrteilig ausgebildet wird. Unterhalb des Verriegelungselements ist ein Distanzstück anordenbar, an dessen freien Ende ein Befestigungsmittel, z.B. eine Aufnahme in Form einer Rohrschelle für die Verlegung von Leitungen unterhalb der Decke vorgesehen ist. Zweckmäßigerweise ist dabei zwischen Verriegelungselement und Distanzstück, sowie zwischen Distanzstück und Befestigungsmittel eine Schraubverbindung bzw. eire Höhenjustiervorrichtung vorgesehen. Dies macht das Abhängelement flexibel gestaltbar. Alle Teile sind vom jeweils anderen Teil lösbar und somit gegen andere Bauteile austauschbar.

Bei einer weiteren vorteilhaften Ausgestaltung der Erfindung ist vorgesehen, dass das Verriegelungselement aus mindestens zwei zueinander relativ verstellbaren Riegelteilen besteht, deren gemeinsame Baulänge insbesondere durch ein Verschieben oder ein Verdrehen gegeneinander, kleiner als der lichte Abstand zwischen zwei in den Profilflanken des Klemm- und Verriegelungsdachprofilbleches benachbart angeordnete Hinterschneidungen, Nasen oder Rückhaltemittel einstellbar ist, das Verriegelungselement zwischen den Hinterschneidungen, Nasen oder Rückhaltemittel hindurch in das Klemm- und Verriegelungsdachprofilblech bis über bzw. unterhalb die Hinterschneidungen, Nasen oder Rückhaltemittel einsetzbar ist und insbesondere durch Verschieben oder Verdrehen der Riegelteile zueinander die Hinterschneidungen. Nasen oder Rückhaltemittel des Klemm- und Verriegelungsdachprofilbleches zumindest mit einem Teilabschnitt seiner Riegelteile hintergreift. Bei dieser Ausführungsform können die Riegelteile miteinander verschraub- und fixierbare Platten oder Profile sein, die ein Verriegelungselement mit gleichen Ausgangsgrößen bilden. Die Riegelteile können soweit zueinander verschoben werden, dass z.B. mit nur einem Verriegelungselementtyp Deckenelemente verschiedener Größen und Sickenarten adaptiert werden können. Die dadurch geringen Lagervorhaltungen bringen einen erheblichen Vorteil.

Bei einer weiteren vorteilhaften Ausgestaltung der Erfindung ist zum Zwecke der Verschraubung beider Teile vorgesehen, dass in mindestens einem der Riegelteile ein dieses durchsetzendes Langloch angeordnet ist. Fener ist vorgesehen. dass die Längsflanken des Langloches eine Verzahnung besitzen. Die Verzahnung greift in den Kerndurchmesser einer zur Positionsfixierung der beiden Riegelteile verwendete Schraube so ein, dass die Schraube nicht mehr in die nächste Verzahnung rutschen kann. Damit wird die Verwendung einer Sicherungsmutter überflüssig.

Bei einer weiteren vorteilhaften Ausgestaltung der Erfindung ist vorgesehen, dass das Verriegelungselement mindestens einen Sperrriegel besitzt, der unter Gegendruck mindestens einer Feder orthogonal zur Vertikalachse des Verriegelungselementes rückstellbar ist, bis die gemeinsame Baulänge von Verriegelungselement und Spemiegel kleiner als der lichte Abstand zwischen zwei in den Profilflanken des Klemm- und Verriegelungsdachprofilbleches benachbart angeordnete Hinterschneidungen, Nasen oder Rückhaltemittel ist, das Verriegelungselement zwischen den Hinterschneidungen, Nasen oder Rückhaltemittel hindurch in das Klemm- und Verriegelungsdachprofilbleches einsetzbar ist und das Verriegelungselement und/oder der Sperrriegel bei Aussetzen der Rückstellkraft die Hinterschneidungen, Nasen oder Rückhaltemittel des Klemm- und Verriegelungsdachprofilbleches zumindest mit einem Teilabschnitt hintergreifen. Dieses Verriegelungselement stellt einen Schnellverschfuss dar, wobei das Verriegelungselement ohne irgend ein Werkzeug in das Dachelement eingesetzt werden kann. Das erfindungsgemäße Abhängelement kann nachträglich in das Deckenelement eingesetzt werden, indem der oder die Sperrriegel gegen den Federdruck zur Vertikalachse des Abhängelementes gedrückt werden, so dass der Verriegelungskopf insgesamt kürzer ist als das lichte Maß zwischen den Rückhaltemitteln in den Blechflanken. Damit kann der Verriegelungskopf zwischen den Rückhaltemitteln des Deckenelements vorbei in dieses eingeführt werden. Wenn das Verriegelungselement über den Rückhaltemitteln positioniert ist, wird die Rückstellkraft auf die Sperrriegel ausgesetzt, wonach sich diese in ihre Ausgangsstellung zurückbewegen. Dadurch wird das Verriegelungselement bzw. die Sperrriegel in eine die Rückhaltemittel des Deckenelements hintergreifende Position gebracht. Bei einer vorteilhaften Ausgestaltung der Erfindung ist vorgesehen, dass das Verriegelungselement als Hohlkörper ausgebildet ist und der Sperrriegel innerhalb des Verriegelungselements geführt ist. Hierdurch kann der Sperrriegel vollständig in das Verriegelungselement eingeschoben und versenkt werden, so dass dieses zwischen den Hinterschneidungen des Deckenelements hindurchgeführt werden kann.

Hierzu ist zweckmäßigerweise vorgesehen, dass das Verriegelungselement an mindestens einem seiner zu den Profilflanken des Deckenelements parallel ausgerichteten Stirnseiten mindestens eine Öffnung besitzt Dies kann eine sich über die ganze Stirnseite erstreckende oder eine nur partiell vorhandene Öffnung sein. Dies richtet sich nach Größe und Art des eingesetzten Sperrriegels.

Bei einer vorteilhaften Ausgestaltung der Erfindung ist vorgesehen, dass in die stirnseitige Öffnung des Verriegelungselements ein solcher Sperrriegel eingesetzt ist, auf dessen sich parallel zur Öffnung erstreckenden Innenfläche sich mindestens eine Feder abstützt. Die Einschubbewegung des Sperrriegels ist dadurch ständig durch die Federkraft mit Druck beaufschlagt. Es ist dabei vorteilhaft, wenn auch auf der gegenüberliegenden Seite ein dementsprechender Sperrriegel vorhanden ist und zwischen beiden Teilen eine oder mehrere Druckfedern eingesetzt werden. Um ein Herausfallen der Sperrriegel aus dem Verriegelungselement zu vermeiden, ist bei einer weiteren vorteilhaften Ausgestaltung der Erfindung vorgesehen, dass in der Bodenfläche des Verriegelungselements mindestens eine Schlitzöffnung angeordnet ist, zu der eine Aufnahme am Sperrriegel benachbart ist und die Schlitzöffnung von einem in der Aufnahme befestigten Griffhebel durchsetzt ist, der unterhalb der Unterseite des Verriegelungselements ausragt. Der Griffhebel kann in Form von Gewindestiften ausgebildet sein, die durch die Schlitzöffnungen hindurch in die Aufnahmen in Form von Gewindebohrungen eingeschraubt werden. Die Schlitzöffnungen sind hierzu an ihren Enden geschlossen. Die Gewindestifte wirken an den geschlossenen Enden der Schlitzaufnahmen als Anschläge, so dass die Sperrriegel in der Ruheposition mit der Federkraft beaufschlagt sind und aus den Stirnseiten des Verriegelungselements austreten. Die so gewählte Ausgestaltung bildet ein Verriegelungselement mit Schnellverschluss, d.h. das Verriegelungselement kann ohne zusätzliche Werkzeuge montiert werden.

Bei einer weiteren vorteilhaften Ausgestaltung der Erfindung ist vorgesehen, dass das Verriegelungselement mindestens einen die Hinterschneidungen, Nasen oder Rückhattemittel des Klemm- und Verriegelungsdachprofilbleches hintergreifbaren Riegel besitzt, der durch eine relative lineare Bewegung zum Verriegetungselement gegenüber den Hinterschneidungen, Nasen oder Rückhaltemittel in eine Sperrposition verstell- und fixierbar ist. Das Verriegelungselement kann erfindungsgemäß so gestaltet werden, dass dieses, durch Verdrehen mit einem Teil seiner Randabschnitte hinter die Rückhaltemittel bewegt wird und die Riegelteile eine zusätzliche Klemmung bewirken. Andererseits kann das Verriegelungselement so gestaltet werden, dass die Riegelteile selbst die Rückhaltemittel des Dachbleches hintergreifen.

Bei einer vorteilhaften Ausgestaltung der Erfindung ist vorgesehen, dass der Riegel ein über eine der Stirnseiten das Verriegelungselement ausfahrbare Zahnstange ist, die mit einem von der Verriegelungselementunterseite zugänglichen Stelirad in Wirkverbindung steht. In der Ausgangsstellung ist der Riegel hinter der Stirnkante des Verriegelungselements positioniert. Während der Montage wird der Riegel hinter die Rückhaltemittel des Deckenelements ausgefahren, so dass sich beispielsweise eine Verklemmung einstellt. Besonders vorteilhaft ist es, wenn zwei parallel zu einander angeordnete Zahnstangen in die Verzahnung eines Stellrades eingreifen. Durch Verdrehen des Stellrades werden die Zahnstangen gegenläufig linear über die Stirnseiten des Verriegelungselements hinaus bewegt und somit dessen Baugröße auf das gewünschte Maß vergrößert, bis diese die Rückhaltemittel des Deckenelements hintergreifen.

Bei einer weiteren vorteilhaften Ausgestaltung der Erfindung ist vorgesehen, dass das unterhalb dem Verriegelungselement angeordnete Distanzstück, das zusammen mit dem Verriegelungselement und dem Befestigungsmittel das Abhängelement blldet, auf seiner den Rückhaltemitteln nahen Stirnkuppe einen Druckkopf trägt Mit der Erfindung kann dieses Abhängelement sicher am Deckenelement fixiert werden, ohne dass auf dieses vom Verriegelungselement oder vom eingeschraubten Distanzstück ausgehende Verformungskräfte negativ einwirken können.

Eine weitere vorteilhafte Ausgestaltung der Erfindung sieht vor, dass das Verriegelungselement zwischen seinen Retentionsabschnitten eine muldenförmige Vertiefung besitzt Ein in dieser flügelartigen Ausführung eingesetztes Verriegelungselement besitzt eine gewisse Eigensteifigkeit. Darüber hinaus ist das Verriegelungselement von etwaigen Versteifungssicken im Blechscheitel beabstandet, so dass diese beim Verriegein nicht kontaktiert werden können, sondern eigens durch den Druckkopf beaufschlagt werden. Hierzu ist bei einer weiteren vorteilhaften Ausgestaltung der Erfindung unterstützend vorgesehen, dass der Druckkopf zumindest teilweise die Flächenstruktur des Innenscheitels des Deckenelements besitzt. Dabei ist der Druckkopf gegenüber der Positivform des Deckenelements mit der entsprechenden Negativausgestaltung versehen. Der Druckkopf wirkt dabei ähnlich wie eine Matrize auf die Innenseite des Blech- oder Nutenscheitels. Aufgrund der weitestgehenden Positiv/Negativ Formengleichheit kann der Blechscheitel nicht deformiert werden.

Bei einer weiteren vorteilhaften Ausführungsfonm der Erfindung ist vorgesehen, dass der Druckkopf gegenüber dem Distanzstück relativ horizontal verdrehbar ist Durch diese Ausgestaltung kann das Distanzstück in die Platte des Verriegelungselements eingedreht werden, ohne dass sich der Druckkopf mitdreht.
Eine vorteilhafte Ausgestaltung der Erfindung sieht hierzu vor, dass der Druckkopf auf einem Kugelzapfen des Distanzstückes befestigt ist Dabei erhält der Druckkopf die Eigenschaft ähnlich eines Druckstückes wie dies auch bei Schraubzwingen bekannt ist und kann neben der horizontalen Drehbeweglichkeit gegenüber dem Distanzstück auch eine begrenzte Kippstellung einnehmen.
Als Werkstoff für den Druckkopf kommen sowohl metallische Werkstoffe als auch solche aus Gummi oder Kunststoff in Frage.

Bei einer weiteren vorteilhaften Ausgestaltung der Erfindung ist vorgesehen, dass zwischen Druckkopf und Blechscheitel eine drehfeste Formschlussverbindung herstellbar ist, wobei zwischen Druckkopf und Verriegelungselement eine Drehverriegelung ausgebildet ist. Ein ganz besonderer Vorteil wird mit der Erfindung dadurch erzielt, dass sich die Drehverriegelung zwischen Druckkopf und Verriegelungselement nicht mehr selbsttätig lösen kann. Zu Montagebeginn ist das Distanzstück so weit aus dem Verriegelungselement heraus gedreht, dass sich der Druckkopf dicht über dem Verriegelungselement befindet. Die gemeinsame Bauhöhe von Druckkopf und Verriegelungselement in dieser Stellung ist ausreichend, um das Abhängelement in der Hochsicke des Deckenelements um seine eigene Vertikalachse zu drehen, so dass die Retentionsabschnitte des Verriegelungselements hinter die Rückhaltemittel des Deckenelements gelangen. Bei weiterem Verdrehen gelangt der Druckkopf wegen seiner an den Blechscheitel angepassten Flächenstruktur mit dem Deckenelement in einen Formschluss, bevor die Retentionsabschnitte des Verriegelungselements aus ihrer Sperrstellung gegenüber den Hinterschneidungen des Deckenelements heraustreten können. Hilfsweise wird das Verriegelungselement manuell in seiner Sperrposition zurückgehalten. Sobald der Druckkopf selbst durch seinen Formschluss mit dem Deckenelement gegen Verdrehung blockiert ist, kommt auch die Drehverriegelung zwischen Druckkopf und Verriegelungselement zur Wirkung. Dies kann durch beidseitige Randschürzen am Druckkopf erfolgen, die sich über die Randseiten des Verriegelungselements erstrecken und eine relative Bewegung beider Teile zueinander verhindem. Die Drehverriegelung kann auch durch Spermasen oder ineinandergreifende Stifte oder funktionsgleiche Mittel erfolgen. Der Druckkopf selbst kann auch als Platte oder Formteil ausgebildet sein, das entsprechend auf die Form des lnnenscheitels des Deckenelements ausgelegt ist.

Bei einer weiteren vorteilhaften Ausgestaltung der Erfindung ist vorgesehen, dass die Platte des Verriegelungselements in Form einer Klemmlasche an ihren den Rückhaltemitteln des Klemm- und Verriegelungsdachprofilbleches nahen Randseiten die Rückhaltemittel zu mindest teilweise umgreifende Keder besitzt. Die Keder tragen zur erhöhten Formschlusswirkung zwischen den Bauteilen bei, da diese auch zu einer teilweisen Auflage der Klemmlasche auf dem Deckenelement führt.

Bei einer weiteren vorteilhaften Ausgestaltung der Erfindung ist vorgesehen, dass die Klemmlasche einen im wesentlichen trapezförmigen Querschnitt besitzt und durch Aufweiten der Sickenöffnung und Verdrängung der Hinterschneidungen, Nasen oder Rückhaltemittel durch die Sickenöffnung hindurch in die Tiefsicke des Klemm- und Verriegelungsdachprofilbleches eindrückbar ist und unterhalb den in ihre Ausgangslage zurückgefederten Hinterschneidungen, Nasen oder Rückhaltemittel positionierbar ist und sich zumindest mit einem Teilabschnitt seiner Stirnseiten auf den Sickenflanken abstützt. Diese Ausführungsform wirkt zugleich als Aussteifung des Klemm- und Veriegelungsdachprofilblechs und kann ebenso per Hand oder mit dem Fuß in die jeweilige Tiefsicke angeschlagen oder eingetreten werden. Zum Zwecke der Blechaussteifung können auch Spannpratzen eingesetzt werden, die in ihrer Adaptionsfunktion den Verriegelungselementen entsprechen. Die Spannpratzen sowie die Verriegelungselemente können als langgestreckte Leisten ausgebildet werden, die in Sickenlängsrichtung und quer zum Sickenverlauf montiert werden. Entsprechend sind die Retentionsabschnitte, beispielsweise in Form von auf deren Unterseite angeordnete Spangen, am Verriegelungselement verteilt. Dabei können die Funktionen der Spannpratzen mit denen der Verriegelungselemente verschmolzen werden. Sinn ist es, das Klemm- und Verriegelungsdachprofilblech so auszusteifen, dass weder Windsogkräfte noch Begehungslasten zu einer Dachverformung führen können, die eventuell ein Herauslösen der gebäudeinnenseitigen Verriegelungselemente verursachen würden.

Bei einer weiteren vorteilhaften Ausgestaltung der Erfindung ist vorgesehen, dass die Klemmlasche ein in die Tiefsicke des Klemm- und Verriegelungsdachprofilblechs einragendes Spannelement trägt, das auf dem Sickenboden abstützbar oder zwischen den Profilflanken des Klemm- und Verriegelungsdachprofilbleches verkeilbar ist. Hierzu ist beispielsweise vorgesehen, dass die Konterplatte auf ihrer der Tiefsicke nahen Unterseite einen zur Konterplattenoberseite hin offenen Gewindekanal besitzenden Gewindestutzen aufweist und dass das Spannelement eine mit einem Schraubkopf auf der einen und mit einer Druckplatte auf der anderen Seite versehene Gewindestange ist, die im Gewindestutzen der Konterplatte mit ihrem Schraubkopf höhenverstellbar aufgenommen ist. Ein damit vorgespanntes Verriegelungselement besitzt zusätzlich erhöhte Auszugswerte.

Bei einer weiteren vorteilhaften Ausgestaltung der Erfindung ist vorgesehen, dass zwischen den einzelnen Klemm- und Veriegelungsdachprofilblechen eine Schubsicherung ausgebildet ist. Dies kann z.B dadurch erzielt werden, dass zumindest die Längsrandseiten der Klemm- und Veriegelungsdachprofilbleche als Hakenrand ausgebildet sind. Dies ist insbesondere für den zu bildenden Verbund der Deckenelemente wichtig.

Bei einer weiteren vorteilhaften Ausgestaltung der Erfindung ist vorgesehen, dass die durch die Hinterschneidungen, Nasen oder Rückhaltemittel gebildeten Taschen mit einer zur Sicken- oder Nutmitte hin ansteigenden Schrägfläche ausgebildet sind. Diese Maßnahme unterstützt ein unbeabsichtigtes Lösen der Verriegelungselemente.

Bei einer weiteren vorteilhaften Ausgestaltung der Erfindung ist vorgesehen, dass das Klemm- und Veriegelungsdachprofilblech durch Umformung eines Trapezprofilbleches gebildet ist, dessen Profilwand an den gewünschten Stellen zu Hinterschneidungen, Nasen oder Rückhaltemittel verformt wird. Die Nachverformung kann mit relativ einfachen Mitteln individuell erfolgen.

Bei einer weiteren vorteilhaften Ausgestaltung der Erfindung ist vorgesehen, dass das Klemm- und Veriegelungsdachprofilblech und oder das Dachbauelement eine verlorene Schalung bildet. Dies stellt eine neue Anwendung dar, die ebenso aufwendige Bohrarbeiten zum Zwecke von Deckeninstallationen erübrigt.

Weitere Vorteile und vorteilhafte Ausgestaltungen der Erfindung sind der nachfolgenden Beschreibung, der Zeichnung und den Ansprüchen entnehmbar.

Die Zeichnung gibt eine besonders bevorzugte Ausführungsform der Erfindung wieder.
Dabei zeigen:
- Figur 1: einen Querschnitt durch ein Dach bei dem das erfindungsgemäße System in einer ersten bevorzugten Ausführungsform eingesetzt ist
- Figur 2: eine Unteransicht eines Verriegelungselements für den Einsatz von der Dachaußenseite
- Figur 3: eine Seitenansicht des Verriegelungselements aus Figur 2
- Figur 4: eine Draufsicht des in das Deckenelement eingesetzten Verriegelungselements aus Figur 2
- Figur 5: eine Unteransicht eines Verriegelungselements für den Einsatz von der Dachinnenseite
- Figur 6: ein Abhängelement
- Figur 7: einen Querschnitt durch ein Dach bei dem das erfindungsgemäße System in einer weiteren bevorzugten Ausführungsform eingesetzt ist
- Figur 8: eine Seitenansicht des ersten Verriegelungselements aus Figur 7
- Figur 9: eine Draufsicht des ersten Verriegelungselements aus Figur 7
- Figur 10: eine Draufsicht des zweiten Verriegelungselements aus Figur 7
- Figur 11: eine Seitenansicht des zweiten Verriegelungselements aus Figur 7
- Figur 12: eine Stirnansicht des zweiten Verriegelungselements aus Figur 7
- Figur 13: eine Seitenansicht eines in das Deckenelement des erfindungsgemäßen Systems eingesetztes Abhängelement
- Figur 14: das Abhängelement aus Figur 13 in einer perspektivischen Darstellung
- Figur 15: den Kopfbereich des Abhängelements aus Figur 13 und 14 mit einem Druckkopf mit Drehverriegelung
- Figur 16: einen Druckkopf mit Drehverriegelung in einer weiteren Variante
- Figur 17: eine weitere Ausführungsform eines Druckkopfes mit Drehverriegelung
- Figur 18: einen Querschnitt durch das Deckensystem mit einem als Klemmlasche ausgebildeten Verriegelungselement
- Figur 19: eine perspektivische Darstellung des Verriegelungselements aus Figur 18
- Figur 20: eine Vergrößerung des Verriegelungselements aus Figur 19
- Figur 21: eine Seitenansicht des in Figur 20 abgebildeten Verriegelungselement
- Figur 22: einen Querschnitt durch das Deckensystem mit weiteren als Klemmlasche ausgebildeten Verriegelungselementen
- Figur 23: eine perspektivische Darstellung eines in Figur 22 abgebildeten Verriegelungselements
- Figur 24: ein in einem Deckenelement eingesetztes Abhängelement in der Seitenansicht
- Figur 25: das Abhängelement aus Figur 24 in einer perspektivischen Darstellung
- Figur 26: das Abhängelement aus Figur 25 in einer Seitenansicht
- Figur 27: das Abhängelement aus Figur 25 in einer Draufsicht
- Figur 28: das Abhängelement aus Figur 25 in einer Stirnansicht
- Figur 29: das Abhängelement aus Figur 25 in einer Explosionsdarstellung
- Figur 30: ein weiteres in einem Deckenelement eingesetztes Abhängelement in der Seitenansicht
- Figur 31: eine Unteransicht auf das Verriegelungselement des in Figur 30 abgebildete Abhängelement
- Figur 32: ein Deckenetement mit einer Schubsicherung in Form eines Hakenrandes
- Figur 33: ein Deckenelement mit einem schräg ansteigenden Rückhaltemittel
- Figur 34-41: verschiedene Einsatzbeispiele der Erfindung

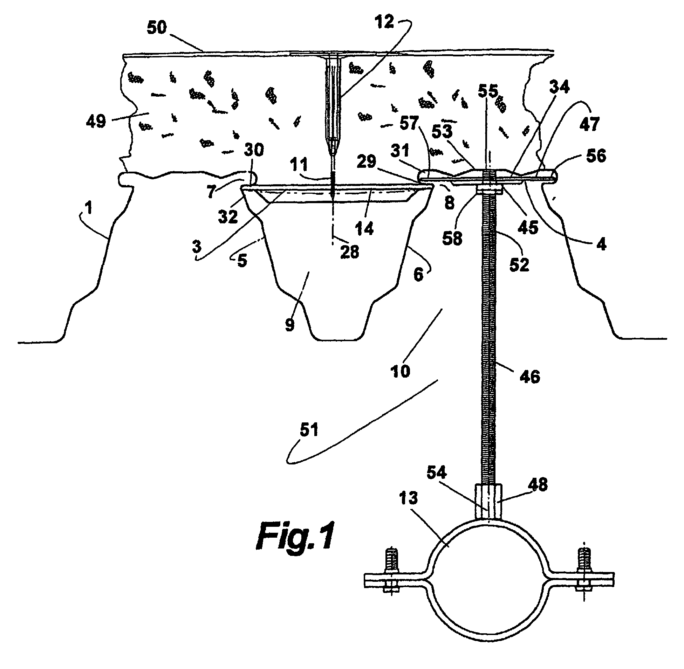

Die Figur 1 zeig das erfindungsgemäße Dach- und Deckensystem in einer ersten Ausführungsform. Das Dach- und Deckensystem wird zum einen durch das Deckenelement 1 und zum anderen durch die Verriegelungselemente 3,4 gebildet Das Deckenelement 1, hier ein Klemm- und Verriegelungsdachprofilblech, besitzt weitestgehend den Querschnitt eines Trapezprofilbleches, wie es üblicherweise für den Flachdachbau verwendet wird. Die Besonderheit des erfindungsgemäßen Deckenelements 1 ist es, dass in dessen Profilflanken 5,6 Hinterschneidungen, Nasen oder Rückhaltemittel 7,8 eingeformt sind, die in der mit 9 bezeichneten Tiefsicke eine Nische 32 bilden und in den Hochsicken 10 als Taschen 31 ausgeprägt sind. Die Hinterschneidungen, Nasen oder Rückhaltemittel 7,8 sind somit sowohl von der Gebäudeinnenseite als auch von der Gebäudeaußenseite her zugänglich. Die Tiefund Hochsicken 9,10 werden mit Verriegelungselementen 3 und 4 adaptiert, damit das Dachelement 1 nicht mehr von mechanischen Befestigungsmitteln 11, hier eine Schraube eines Dämmstoffbefestigers 12, oder von Befestigungsmitteln 13 für unterhalb der Gebäudedecke auf- bzw. abzuhängende Konstruktionen und Installationen angebohrt werden muss.

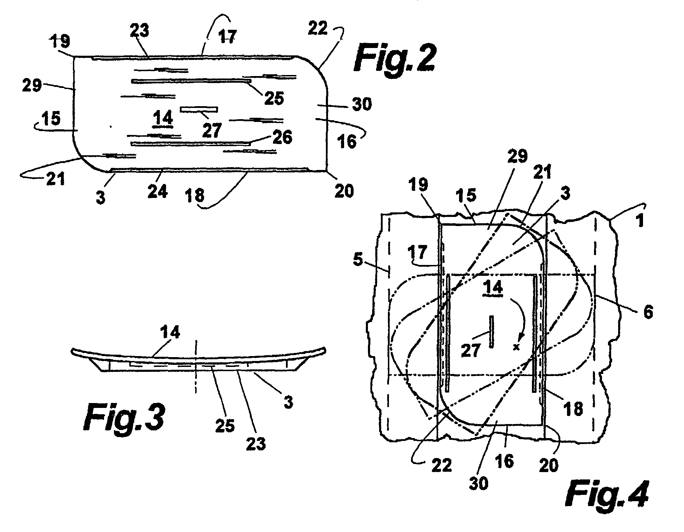

Die Figuren 2 bis 4 zeigen ein Verriegelungselement 3 für die gebäudeaußenseitige Montage mit dem Deckenelement 1. Das Verriegelungselement 3 ist im wesentlichen eine rechteckige Platte 14 mit einer konvexen Wölbung. Diese gibt der Platte 14 gegenüber der später angreifenden Schraube 11 (Fig.1) eine gewisse Vorspannung. Die Platte 14 besitzt zwei zueinander parallele Schmalseiten 15,16 und zwei ebenso zueinander parallel verlaufende Längsseiten 17,18, die sich orthogonal zu den Schmalseiten erstrecken. Zwei diagonal benachbarte Plattenecken sind mit spitzen Kanten 19,20 und die beiden anderen diagonal benachbarten Ecken mit einem Radius 21,22 ausgebildet. Auf der Plattenunterseite erstrecken sich randseitig herabgezogene Versteifungsstege 23,24, die ebenso zur Biegesteifigkeit der Platte beitragen, wie die im Plattenteil selbst angeordneten Rippen 25,26. In etwa dem Plattenzentrum ist das Verriegelungselement 3 von einem Schlitz 27 durchsetzt, in den ein hier nicht näher gezeigtes Werkzeug für die Montage eingeführt werden kann.

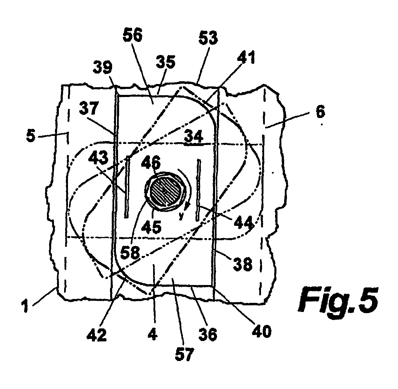

Die Figur 5 zeigt ein Verriegelungselement 4 für die gebäudeinnenseitige Montage mit dem Deckenelement 1. Der Aufbau des Verriegelungselements 4 entspricht weitestgehend dem Verriegelungselement 3 und ist im wesentlichen eine rechteckige Platte 34 mit einer hier nicht weiter dargestellten konkaven Wölbung zur Erzielung einer Vorspannung gegenüber der Abhängelast Die Platte 34 besitzt zwei zueinander parallele Schmalseiten 35,36 und zwei ebenso zueinander parallel verlaufende Längsseiten 37,38, die sich orthogonal zu den Schmalseiten erstrecken. Zwei diagonal benachbarte Plattenecken sind mit spitzen Kanten 39,40 und die beiden anderen diagonalbenachbarten Ecken mit einem Radius 41,42 ausgebildet. Auf der Plattenunterseite erstrecken sich randseitig herabgezogene Versteifungsstege 43,44, die zur Biegesteifigkeit der Platte beitragen. In etwa dem Plattenzentrum trägt das Verriegelungselement 4 einen bodenseitigen Gewindestutzen 45, in den ein Distanzstück 46 in Form einer Gewindestange eingeschraubt ist. Die Gewindestange durchsetzt die Platte 34, so dass diese bis über die Plattenoberkante 47 hinaus in das Verriegelungselement 4 eingeschraubt werden kann. An seinem freien Ende ist auf das Distanzstück 46 ein Befestigungsmittel 13 in Form einer Rohrschelle aufgebracht, wobei hier eine Schraubverbindung 48 vorgesehen ist.
Bei der Montage der in der Figur 1 bis 5 dargestellten Verriegelungselemente 3,4 mit dem Deckenelement 1 wird wie folgt vorgegangen. Zunächst wird die Dachaußenfläche vorbereitet. Hierzu werden die Tiefsicken 9 des Deckenelements 1 an den Stellen mit den Verriegelungselementen 3 bestückt, wo später das Dämmmaterial 49 und die Dichtungsbahn 50 auf dem Dach befestigt werden soll. Hierzu wird die Dichtungsbahn üblicherweise quer über die Sicken ausgerollt. Entsprechend den bauspezifisch angegebenen Windsogkräften und Auszugswerten ist die Befestigermenge pro Quadratmeter zu wählen. Die Verriegelungselemente 3 werden dabei mit ihren Längsseiten 17,18 parallel zu den Profilflanken in Sickenlängsrichtung in die Tiefsicke 9 eingeführt und, wenn sich die Platte 14 unterhalb den Hinterschneidungen, Nasen oder Rückhaltemittel 7,8 befindet, um 90° in Pfeilrichtung x um seine Vertikalachse 28 (Fig.4) verdreht. Die Radien 21,22 schwenken dabei an den Profilflanken 5,6 des Deckenelements 1 vorbei und schlagen mit ihren Schmalseiten 15,16 an diesen an. Die so vorbereitete Dachfläche wird mit den Dämmmaterialien 49 belegt und mit den Dichtungsbahnen 50 überzogen, die mit den Befestigem 12 fixiert werden. Deren Schraube 11 schneidet sich in die jeweilige Platte 14 der Verriegelungselemente 3 ein. Beim Einschraubvorgang überträgt die Schraube 11 Rotationskräfte auf das Verriegelungselement 3. Diese kann sich allerdings nicht mit der Schraube mitdrehen, da die Schmalseiten 15,16 der Platte 14 an die Profilflanken 5,6 anschlagen und sich die Platte innerhalb der Sicke verkeilt Darüber hinaus wird die Platte 14 von ihrer zunächst konvexen Wölbung gestreckt und zusätzlich mit den durch 29 und 30 bezeichneten Retentionsabschnitten an die Unterseiten der Hinterschneidungen, Nasen oder Rückhaltemittel 7,8 gepresst.
Im Gebäudeinneren können nun alle nur denkbaren Installationen an der Decke erfolgen. Dies können Beleuchtungen, Sprinkleranlagen, Kabel, Beschilderungen oder Rohre sein. Im Ausführungsbeispiel gemäß der Figur 1 werden unterhalb der Decke Rohre verlegt Das Verriegelungselement 4 wird hierzu als Kopfplatte für ein mit 51 bezeichnetes Abhängelement eingesetzt. Das Verriegelungselement 4, das auf seiner Unterseite die Gewindebuchse 45 aufweist, wird zunächst mit dem Distanzstück 46 in der gewünschten Länge bestückt, das dazu in die Platte 34 von unten nur soweit eingeschraubt wird, dass dessen Gewinde 52 gerade die ersten Gewindegänge der Gewindebuchse 45 erfasst. Anschließend wird das Distanzstück 46 mit dem Befestigungsmittel 13 in Form einer Rohrschelle bestückt. Das so vorbereitete Abhängelement 51 wird in die Hochsicke 10 des Deckenelements 1 eingeführt, indem das Verriegelungselement 4 mit seinen Längsseiten 37,38 parallel zu den Profilflanken 5,6 ausgerichtet und bis nahe des Sickenscheitels 53 in das Deckenelement eingesetzt wird. Wenn sich die Platte 34 oberhalb der Hinterschneidungen, Nasen oder Rückhaltemittel 7,8 befindet, wird das Abhängelement 51 bzw. das Verriegelungselement 4 um 90° um die Vertikalachse 54 in Pfeilrichtung y (Fig.5) verdreht. Dabei gleiten zuerst die Radien 41,42 an den Profilflanken 5,6 des Deckenelements 1 vorbei. Ist die volle 90° Drehung erreicht, schlagen die Schmalseiten 35,36 an die Profilflanken 5,6 an. Ein weiteres Verdrehen ist nicht mehr möglich, da sich in dieser Situation eine Verkeilung zwischen Deckenelement und Verriegelungselement einstellt. Da die Platte 34 des Verriegelungselements 4 in dieser Lage verbleibt, kann das Distanzstück 46 noch weiter in die Platte 34 eingeschraubt werden, so dass dieses mit seiner Stimkuppe 55 über die Oberkante 47 der Platte 34 heraustritt und auf die Unterseite des Sickenscheitels 53 presst Dadurch werden die mit 56 und 57 bezeichneten Retentionsabschnitte der Platte 34 auf die Hinterschneidungen, Nasen oder Rückhaltemittel 7,8 des Deckenelements 1 gedrückt, wobei die Platte 34 von ihrer zunächst konkaven Wölbung gestreckt wird, mit dem Resultat, dass das Verriegelungselement 4 in der Hochsicke 10 des Deckenelements 1 verspannt wird. Nach dem die Deckenunterseite mit den Abhängelementen 51 bestückt ist, können die hier nicht näher dargestellten Rohre in den Befestigungsmitteln 13 eingezogen werden. Zum nivellieren der verlegten Rohre, wird die mit 58 bezeichnete Konterschraube sowie die Schraubverbindung 48 betätigt, die zugleich entsprechende Höhenjustiervorrichtungen darstellen.

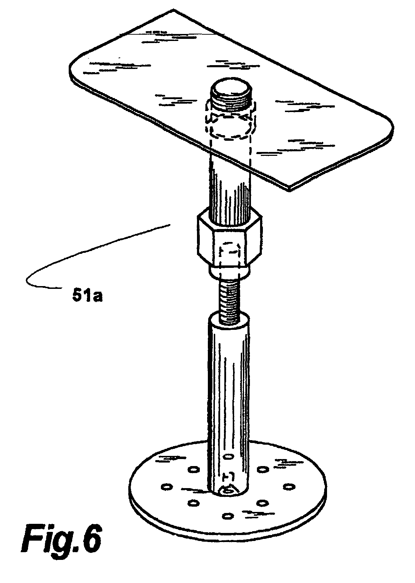

Das in Figur 6 dargestellte Abhängelement ist mit 51 a bezeichnet und entspricht in seinem Wesen und seiner Funktion dem, das bereits in Zusammenhang mit Figur 1 beschrieben ist. ln soweit wird auf diese Beschreibung Bezug genommen.

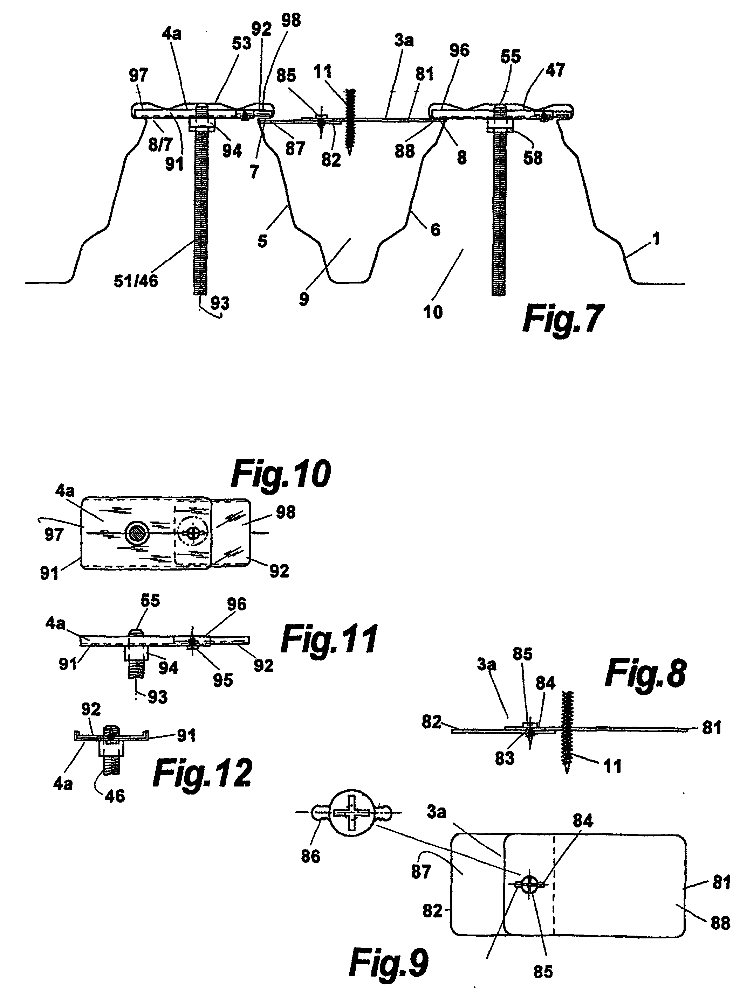

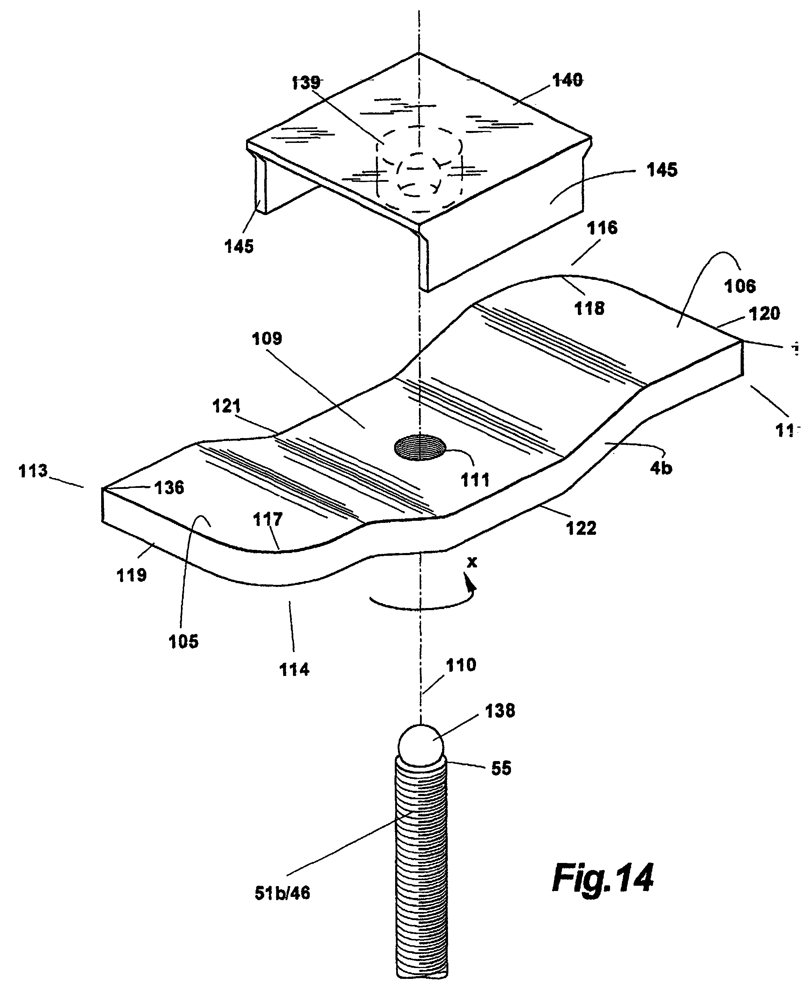

Die Figur 7 gibt ein Einsatzbeispiel der Erfindung mit zwei weiteren Ausführungsformen von erfindungsgemäßen Verriegelungselementen 3a,4a wieder, welche näher in den Figuren 12 bis 16 beschrieben sind.

Die Figuren 8 und 9 geben ein zweiteitiges Verriegelungselement 3a für die dachaußenseitige Montage in einer Tiefsicke 9 des Dachelements 1 wieder. Das Verriegelungselement 3a besteht aus zwei relativ gegeneinander verschiebliche Platten 81,82. Hierzu besitzt die untere Platte 82 ein Kernloch 83 und die obere Platte 81 ein Langloch 84. Besonders ausdrehsicher ist die Verbindung, wenn eine selbstschneidende Schraube 85 verwendet wird, die mit einer Verzahnung 86 des Langloches 84 zusammen wirkt. Das zusammen geschobene Verriegelungselement 3a wird in die Tiefsicke 9 des Deckenelements 1 eingesetzt Wenn sich der Plattenkörper unterhalb der Rückhaltemittel 7,8 befindet, werden die Platten 81,82 auseinander geschoben, bis sie die lichte Weite zwischen den Rückhaltemitteln ausfüllt bzw. an die Profilflanken 5,6 anschlagen. Die stirnseitigen Randabschnitte der Platten 81,82 bilden dabei die Retentionsabschnitte, die mit 87 und 88 bezeichnet sind. Anschließend wird die eingenommene Plattenlänge durch Anziehen der Schraube 85 fixiert, wobei sich die Schraube in das Kernloch 83 eingräbt und zugleich die Platten gegeneinander presst Da auch die Verzahnung 86 des Langloches 84 die Gewindeflanken der Schraube 85 hintergreifen ist die eingenommene Plattenposition gegen Verstellung gesichert. Die so montierten Platten können dann von der Schraube 11 des Befestigungselementes für den Dachaufbau erfasst werden. Schon alleine die Zugkraft der Schraube 11 führt zu einem Anpressen der Retentionsabschnitte 87,88 an die Unterseiten der Rückhaltemittel 7,8 des Deckenelements 1. Die Schraube 11 selbst weist gegenüber der Konterplatte ausreichende Auszugswerte auf, wie diese auch bei Verschraubungen im Dachblech erreicht werden.

Das in den Figuren 10 bis 12 dargestellte Verriegelungselement ist in seiner Gesamtheit mit 4a bezeichnet. Das Verriegelungselement 4a besteht aus zwei Riegelteilen 91,92 in Form von im wesentlichen rechteckigen und im Querschnitt U-förmigen metallischen Profilen. Dieser Profilquerschnitt bringt den Vorteil mit sich, dass die Profilstege zu gleich als Versteifungsstege wirken. Mit 93 ist die Vertikalachse des Verriegelungselements 4a bezeichnet. Koaxial zur Vertikalachse 93 ist ein Gewindestutzen 94 vorgesehen, in den das Distanzstück 46 eingeschraubt wird. Es ist ein Merkmal des erfindungsgemäßen Verriegelungselements 4a, wie auch das Verriegelungselement 3a, dass diese bzw. deren beiden Riegelteile oder Platten soweit zusammengeschoben werden können, dass deren gemeinsame Baulänge kleiner dimensioniert ist als der lichte Abstand zwischen zwei Rückhaltemitteln 7,8 des mit 1 bezeichneten Deckenelements.

Bei der Montage des erfindungsgemäßen Verriegelungselements wird wie folgt verfahren. Die mit 95 bezeichnete Verbindungsschraube wird etwas gelöst und beide Riegelteile 91,92 soweit ineinander eingeschoben, bis deren Baulänge etwas kleiner ist, als der lichte Abstand zwischen zwei Rückhaltemitteln 7,8. Das so zusammengeschobene Verriegelungselement 4a wird über die Rückhaltemittel 7,8 hinaus in die Hochsicke 10 bis nahe des Sickenscheitels 53 geführt. Anschließend werden beide Riegelteile 91,92 wieder soweit wie möglich auseinander geschoben, so dass sie hinter die Rückhaltemittel 7,8 greifen. Dabei schlagen die Stirnseiten des Verriegelungselements 4a an die Innenflächen oder die Rundungen der durch die Rückhaltemittel 7,8 gebildeten Taschen an. Durch Anziehen der Verbindungsschraube 95 wird die eingenommene Position der Riegelteile 91,92 fixiert, deren Ränder die mit 97,98 bezeichneten Retentionsabschnitte bilden. Wenn das Längenmaß des Verriegelungselements 4a entsprechend auf das Innenmaß der Taschen eingestellt wird, tritt bereits in diesem Montagestadium eine Verklemmung ein. Eine zusätzliche Verriegelungswirkung wird dadurch bewirkt, dass das Distanzstück 46 soweit in das Verriegelungselement 4a bzw. den Gewindestutzen 94 eingedreht wird, dass dieses mit seiner Stirnkuppe 55 über die Oberseite 96 des Verriegelungselements 4a hinaus ragt und auf den Sickenscheitel 53 drückt. Dabei wird das Verriegelungselement 4a mit seinen Riegelteilen 91,92 auf die Rückhaltemittel 7,8 gepresst Mit der unterhalb des Verriegelungselements 4a angeordneten Kontermutter 58 wird die zwischen Verriegelungselement 4a und Distanzstück 46 eingenommene Position fixiert.

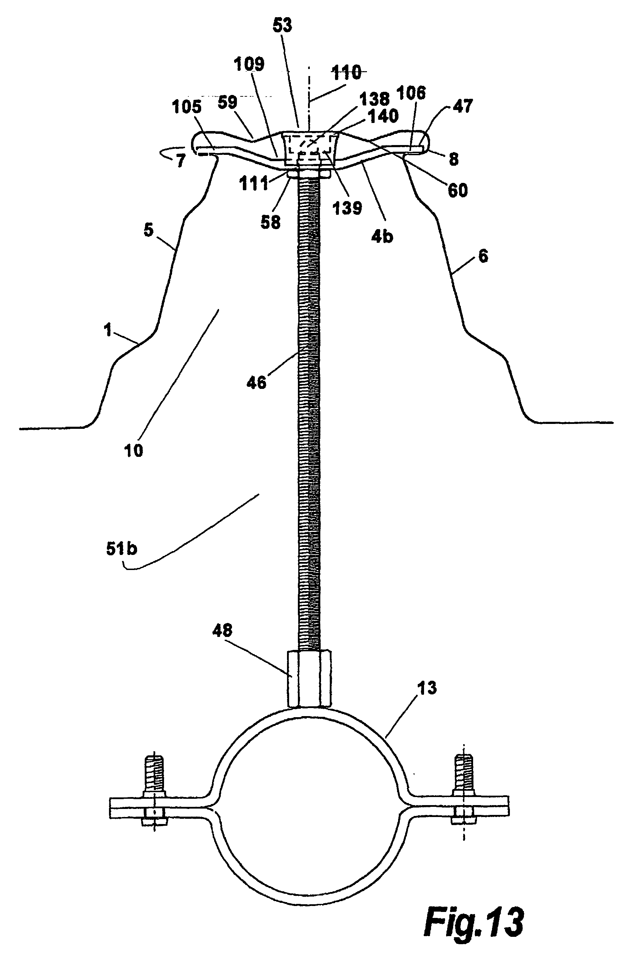

In den Figuren 13 bis 15 ist ein Abhängelement dargestellt, das in seiner Gesamtheit mit 51b bezeichnet ist. Es besteht im wesentlichen aus einem Verriegelungselement 4b, einem Distanzstück 46 in Form einer Gewindestange und einem als Rohrschelle ausgebildeten Befestigungsmittel 13. Das Verriegetungselement 4b ist aus einer im wesentlichen rechteckigen metallischen Platte geschaffen, die an ihren Stirnseiten mit 105 und 106 bezeichnete Retentionsabschnitte trägt, die in der Art von angeformten Laschen ausragen. Die Platte ist zudem beidseits im Bereich der Retentionsabschnitte 105,106 flügelartig abgewinkelt, so dass im Zentrum des Verriegelungselements 4b eine muldenförmige Vertiefung 109 ausgebildet ist Mit 110 ist die Vertikalachse des Abhängelementes 51b bezeichnet Koaxial zur Vertikalachse 10 ist im Verriegelungselement 4b ein Innengewinde 111 vorgesehen, in das das Distanzstück 46 eingeschraubt wird. Das Verriegelungselement 4b besitzt jeweils zwei parallele Schmalseiten 119,120 und zwei ebenso zu einander parallel verlaufende Längsseiten 121,122, wobei die Schmalseiten 119,120 kleiner und die Längsseiten 121,122 größer dimensioniert sind als der lichte Abstand zwischen zwei Rückhaltemitteln 7,8 des mit 1 bezeichneten Deckenelements. Mit 113,114,1 15,und 116 sind die Eckbereiche des Verriegelungselements 4b bezeichnet. Die beiden diagonal benachbarten Eckbereiche 114 und 116 sind mit einem Radius 117,118 ausgebildet, während die beiden anderen diagonalen Eckbereiche 113 und 115 weitestgehend spitze Kanten 136,137 besitzen. Das Distanzstück 46 trägt auf seiner dem Sickenscheitel 53 nahen Stimkuppe 55 einen Kugelzapfen 138, der, wenn er durch das Verriegelungskelement 4b hindurchgeführt ist, in einem Gelenkstutzen 139 eines Druckkopfes 140 aufgenommen wird. Der Druckkopf 140 besitzt eine Platte, die zwischen den Aussteifungssicken 59,60 im Scheitel 53 des Deckenelements 1 zu liegen kommt
Bei der Montage des erfindungsgemäßen Abhängelementes 51b wird wie folgt verfahren. Das Verriegelungselement 4b wird mit seinen Längsseiten 121,122 parallel zu den Profilflanken 5,6 des Deckenelements 1 ausgerichtet. Da die Schmalseiten 119 und 120 des Verriegelungselements 4b kleiner dimensioniert sind als der lichte Abstand zwischen den Rückhaltemitteln 7,8 kann das Verriegelungselement 4b von unten her über diese Rückhaltemittel 7,8 hinaus in die Hochsicke 10 bis nahe des Sickenscheitels 53 geführt werden. Anschließend wird das Abhängelement 51 in Pfeilrichtung "x" um seine Vertikalachse 110 gedreht. Dabei schwenken zuerst die mit einem Radius 117,118 ausgebildeten Eckbereiche 114,116 hinter die Rückhaltemittel 7,8 des Deckenelements 1. Beim weiteren Verdrehen schlagen die Stirnseiten des Verriegelungselements 4b an die Innenflächen oder die Rundungen der durch die Rückhaltemittel 7,8 gebildeten Taschen an. Eine darüber hinaus gehende Verdrehung wird durch die spitzkantigen Eckbereiche 113,115 verhindert. Wenn das Längenmaß des Virriegelungselements 4a entsprechend auf das lnnenmaß der Taschen abgestimmt ist, tritt auch hier bereits in diesem Montagestadium eine Verklemmung ein. Eine zusätzliche Verriegelungswirkung wird dadurch bewirkt, dass das Distanzstück 46 soweit in das Verriegelungselement 4b eingedreht wird, dass dieses über dessen Oberseite heraus führt und mit seinem Druckkopf 140 auf den Sickenscheitel 53 drückt. Dabei wird das Verriegelungselement 4b mit seinen Retentionsabschnitten 105,106 auf die Rückhaltemittel 7,8 gepresst und verspannt. Hierbei gelangt der Druckkopf 140 zwischen die Aussteifungssicken 59,60 des Deckenelements 1, wobei zwischen Druckkopf und Sicken ein Formschluss gebildet wird. Die über die Randseiten 121,122 das Verriegelungselement 4b überragenden Schürzen 145 bilden die Drehverriegelung für das Verriegelungselement 4b. Eine Demontage des .Abhängelements 51b kann somit nur durch eine gezielte Drehbewegung erfolgen. Dies bedeutet zugleich, dass ein durch Dachbewegungen und Vibrationen verursachtes unbeabsichtigtes Lösen des Verriegelungselements 4b aus seiner Sperrposition unmöglich ist Mit der unterhalb des Verriegelungselements 4b angeordneten Kontermutter 58 wird die zwischen Verriegelungselement 4b und Distanzstück 46 eingenommene Position fixiert In dem als Rohrschelle ausgebildeten Befestigungselement 13 können beispielsweise Wasserleitungen unterhalb der Decke aufgehängt werden. Bei Bedarf kann das Befestigungsmittel 13 gegen eine andere Aufnahme ausgetauscht werden.

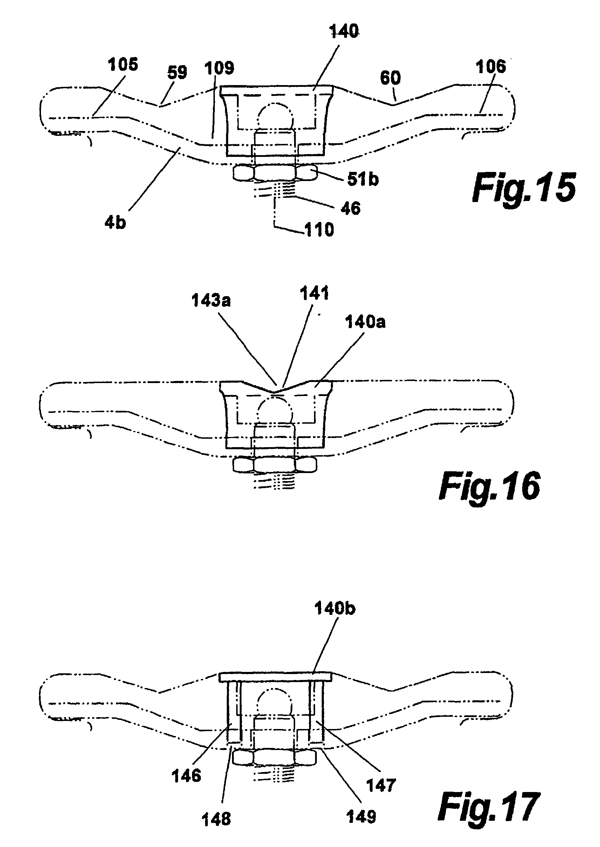

Figur 16 zeigt eine weitere Ausführungsform eines Druckkopfes 140a, der in ein Deckenelement mit einer Sicke 143a im Obergurt eingesetzt ist In diesem Falle besitzt der Druckkopf 140a eine Vertiefung 141 in Form einer Sicke.

Figur 17 zeigt einen Druckkopf 140b mit zwei Sperrstiften 146,147, die durch zwei Bohrungen 148,149 im Verriegelungselement geführt sind.

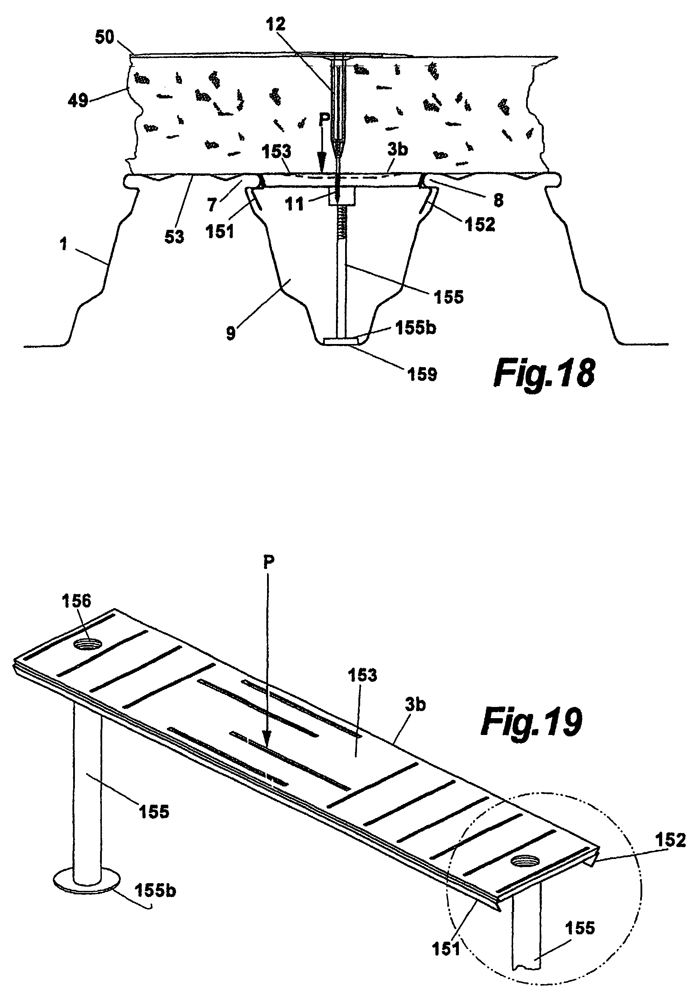

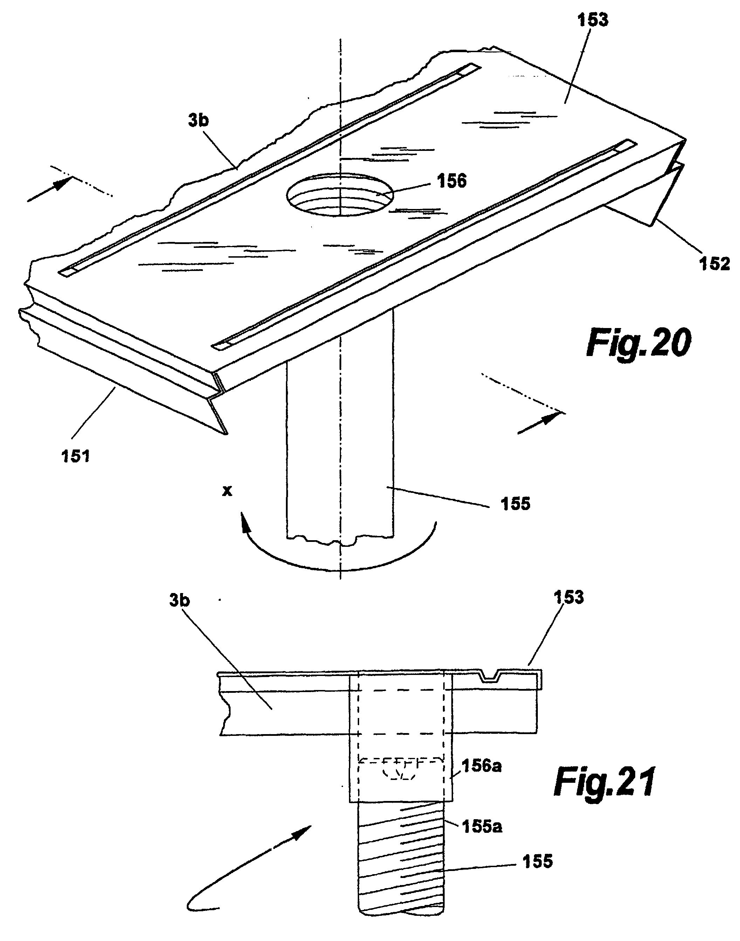

Die Figuren 18 bis 21 zeigen ein als Klemmlasche ausgebildetes Verriegelungselement 3b mit Retentionsabschnitten 151,152 in Form von federnden, elastischen Zungen und in Form einer langgestreckten Leiste. Wird das Verriegelungselement in die Sicke 9 eingedrückt, so werden die Retentionsabschnitte 151.152 zurückgedrängt und schnappen erst in ihre Ausgangsstellung zurück, wenn die mit 153 bezeichnete Platte in etwa eine Ebene mit dem Sickenscheitel 53 bildet. Dabei untergreifen die Retentionsabschnitte 151,152 die Rückhaltemittel 7,8 des Deckenelements 1. Eine Besonderheit der vorliegenden Ausführungsform besteht u.a. darin, dass die Platte 153 von Spannelementen 155 durchsetzt ist. Nachdem das Verriegelungselement 3b in die Sicke 9 eingedrückt ist, kann ein in die mit 156 bezeichnete Gewindebohrung eintauchender Schraubbit das Spannelement 155, das hierzu bevorzugt eine Gewindestange ist, nach Pfeilrichtung x verdrehen. Dabei bewegt sich das Spannelement 155 nach unten aus der Platte 153 heraus und drückt auf die Sickensohle 159. Dabei werden die Retentionsabschnitte 151,152 gegen die Unterseite der Rückhaltemittel 7,8 gepresst und das Verriegelungselement 3b in der Sicke verspannt. Das dargestellte Verriegelungselement 3b ist für den Einsatz in Sickenlängsrichtung vorbereitet. Werden die Retentionsabschnitte in Leistenlängsrichtung, also um 90° verdreht und entsprechend der Sickenabstände an der Plattenunterseite angeordnet, so eignet sich das Verriegelungselement auch zum Einsatz quer zu den Sicken. Dies bringt den Vorteil mit sich, dass eine lineare Befestigungsstrecke geschaffen wird, ohne zusätzliche Messmittel einzusetzen. Darüber hinaus erfüllen beide leistenartigen Verriegelungselemente die Aufgabe von Spannpratzen, die der zusätzlichen Verspannung und Versteifung des Bleches dienen.

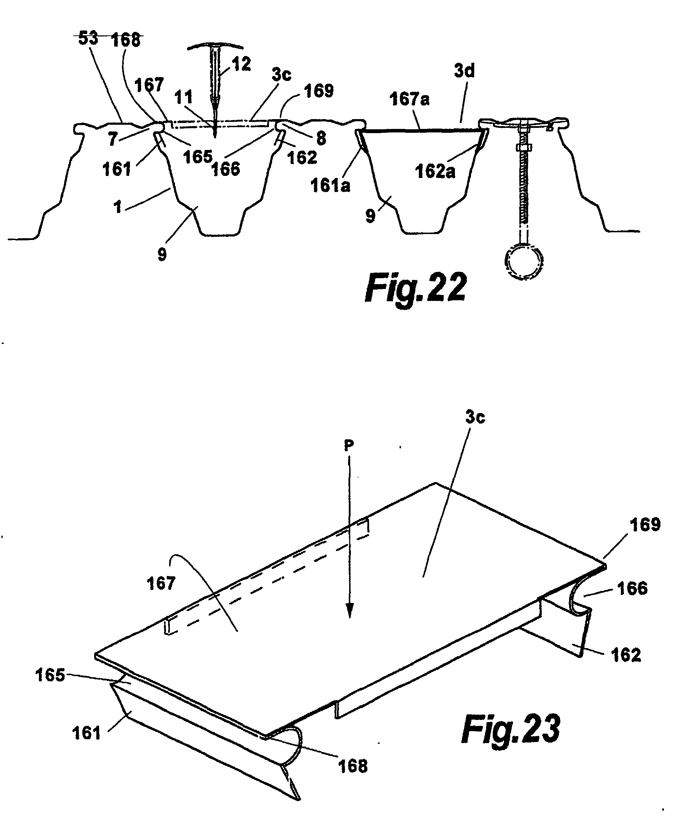

Die Figuren 22 und 23 zeigen ein weiteres Verriegelungselement 3c mit Retentionsabschnitten 161,162 in Form von federelastischen Zungen. Die Besonderheit der vorliegenden Ausführungsform besteht u.a. darin, dass zwischen den Retentionsabschnitten 161 162 und der mit 167 bezeichneten Platte randseitige Keder 165, 166 gebildet sind, in denen die Rückhaltemittel 7,8 des Deckenelements 1 eingefangen sind, wenn sich das Verriegelungselement in seiner Montageendlage befindet. Zusätzlich bilden die Randseiten 168,169 der Platte 167 eine Auflage mit den Sickenscheiteln 53.

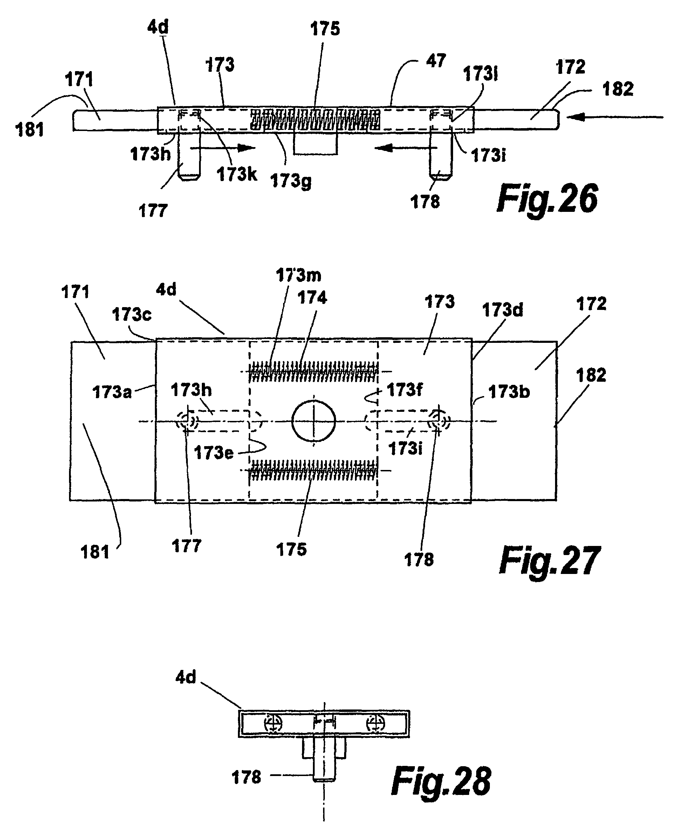

In Figur 26 ist ferner ein mit 3d bezeichnetes Verriegelungselement dargestellt, das als Klemmlasche ausgebildet ist und einen im wesentlichen trapezförmigen Querschnitt besitzt. Das Verriegelungselement 3d wird durch Aufweiten der Sickenöffnung und Verdrängung der Hinterschneidungen, Nasen oder Rückhaltemittel 7,8 durch die Sickenöffnung hindurch in die Tiefsicke 9 des Deckenelements 1 eingedrückt und unterhalb den in ihre Ausgangslage zurückgefederten Hinterschneidungen, Nasen oder Rückhaltemittel 7,8 positioniert. Dabei stützt sich das Verriegelungselement 3d zumindest mit einem Teilabschnitt seiner Stirnseiten auf den Sickenflanken 5,6 ab.

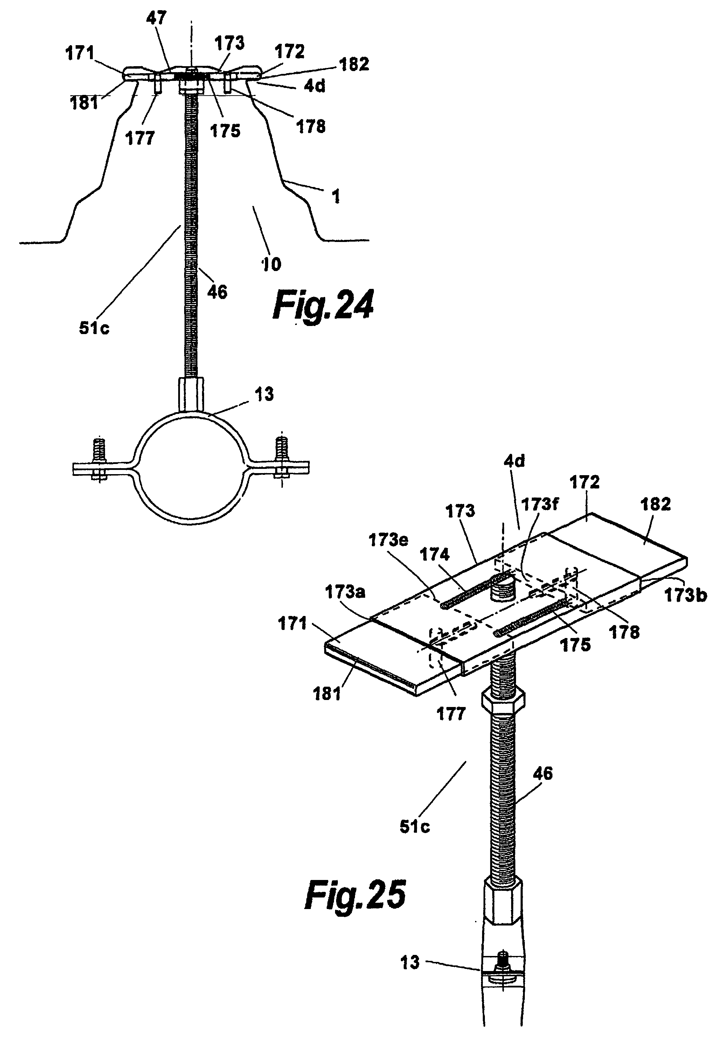

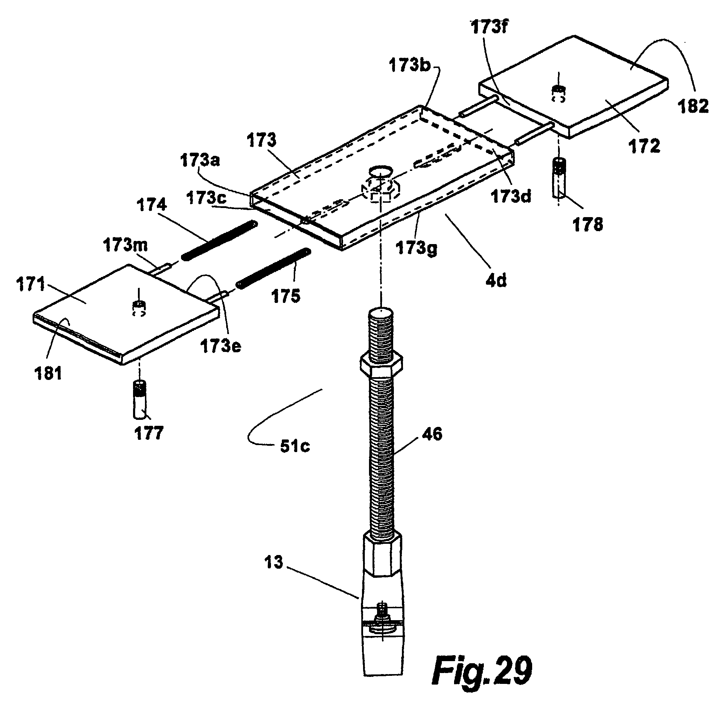

Die Figuren 24 bis 29 zeigen ein Verriegelungselement 4d in Form einer Schnellverriegelung. Das Verriegelungselement 4d besitzt zwei federbelastete Riegelteile 171,172 die in einem Hohlkörper 173 aufgenommen sind. Zwischen beiden Riegelteilen sind Druckfedem 174,175 eingesetzt, die in Ruhestellung die Riegel 171,172 auseinander drücken. Diese können jedoch nicht aus dem Hohlkörper austreten, da die mit 177 und 178 bezeichneten Stifte zugleich den Austrittsweg der Riegel begrenzen. Wird das im gesamten dargestellte Abhängelement 51c in der Sicke 10 montiert, werden die Riegel 171,172 durch Zusammenschieben der Stifte 177,178 in den Hohlkörper 173 eingezogen so dass ein Einführen in die Sicke möglich ist Bei erreichen der Endlage hinter den Rückhaltemitteln 7,8 wird der Druck auf die Stifte 177,178 ausgesetzt und die Riegel 171,172 gehen in ihre Ausgangsstellung zurück. Dabei hintergreifen sie den mit 181,182 bezeichneten Retentionsabschnitten die Rückhattemittel 7,8 des Deckenelements 1. Im einzelnen besitzt dieses Verriegelungselement folgendes Wesen. Das Verriegelungselement 4d besitzt zwei Sperrriegel 171,172, die unter Gegendruck von den beiden Federn 174,175 orthogonal zur Vertikalachse des Verriegelungselementes 4d rückstellbar sind, bis die gemeinsame Baulänge von Verriegelungselement 4d und Sperrriegel 171,172 kleiner als der lichte Abstand zwischen den zwei in den Profilflanken 5,6 des Deckenelements 1 benachbart angeordnete Hinterschneidungen, Nasen oder Rückhaltemittel 7,8 ist. Das Verriegelungselement 4d wird so zusammengedrückt und zwischen den Hinterschneidungen, Nasen oder Rückhaltemittel 7,8 hindurch in das Deckenelement 1 eingesetzt. Beim Aussetzen der Rückstellkräfte expandiert das Verriegelungselement 4d und die Sperrriegel 171,172 hintergreifen die Hinterschneidungen, Nasen oder Rückhaltemittel 7,8 des Deckenelements 1 zumindest mit einem Teilabschnitt. Dabei ist das Verriegelungselement 4d als Hohlkörper 173 ausgebildet in dem die Sperrriegel 171,172 geführt sind. An seinen Profilflanken 5,6 des Deckenelements 1 parallel ausgerichteten Stirnseiten 173a,173b besitzt des Verriegelungselement eine öffnung 173c,173d. die Sperrriegel sind in die Öffnungen eingesetzt, auf deren zu den Öffnungen 173c,173d erstreckenden innenliegenden Stirnfläche 173e,173f stützen sich die Federn 174,175 ab. Ferner ist vorgesehen, dass im Boden 173g des Verriegelungselementes 4d zwei Schlitzöffnungen 173h,173i angeordnet sind, zu denen je eine Aufnahme 173k,173l an den Sperrriegeln 171,172 benachbart sind und die Schtitzöffnungen 173h,173i von einem in der Aufnahme befestigten Griffhebel 177,178 durchsetzt sind, die unterhalb des Bodens 173g des Verriegelungselements 4d ausragen. Hierzu ist ferner vorgesehen, dass die Aufnahmen 173k,173l an den Sperrriegeln als Gewindelöcher ausgebildet sind. Die Schlitzöffnungen 173h,173i sind an ihren Stirnenden geschlossen und bilden Anschläge bzw. Begrenzungen für die Griffhebel, die als Gewindestifte vorliegen. Damit die Federn sicher geführt werden können, ist vorgesehen, dass die Sperrriegel 171,172 auf ihren innenliegenden Stirnfläche 173e,173f für die Federaufnahme geeignete Hülsen oder Bolzen 173m tragen.

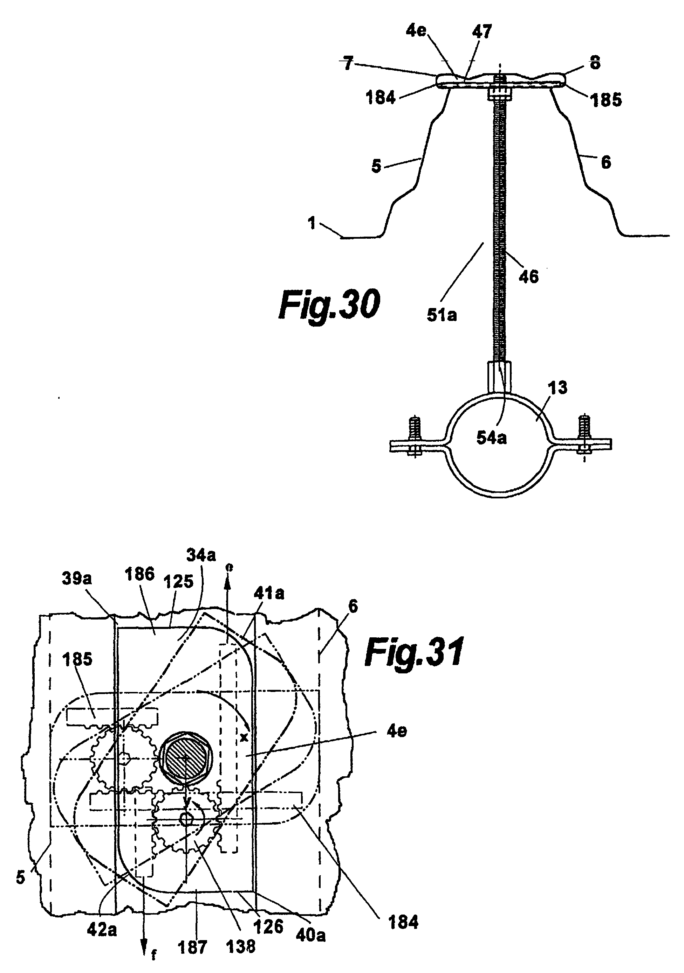

Die Figuren 30 und 31 zeigen ein Verriegelungselement 4e, das ebenso wie das Grundmodell 4 verdreht wird. Insofern wird auf alle diese Funktion erfüllenden Merkmale und Elemente Bezug genommen. Das Verriegelungselement 4e hat u.a. die Besonderheit, dass nach dem Einsetzen in der Sicke und nach Erreichen der Montageendposition eine zusätzliche Verspannung dadurch erzielt wird, dass durch Betätigung eines Stellrades 138 nach y zwei Riegel 184,185 linear nach e und f ausfahren und gegen die Profilflanken 5,6 des Deckenelements 1 pressen. Die Verriegelungskraft im Bereich der Retentionsabschnitte 186,87 bleibt dabei erhalten.

Die nachfolgenden Figuren zeigen allesamt schematisch dargestellte Ausführungen der Erfindung um das weite Spektrum des Erfindungsgedankens aufzuzeigen.

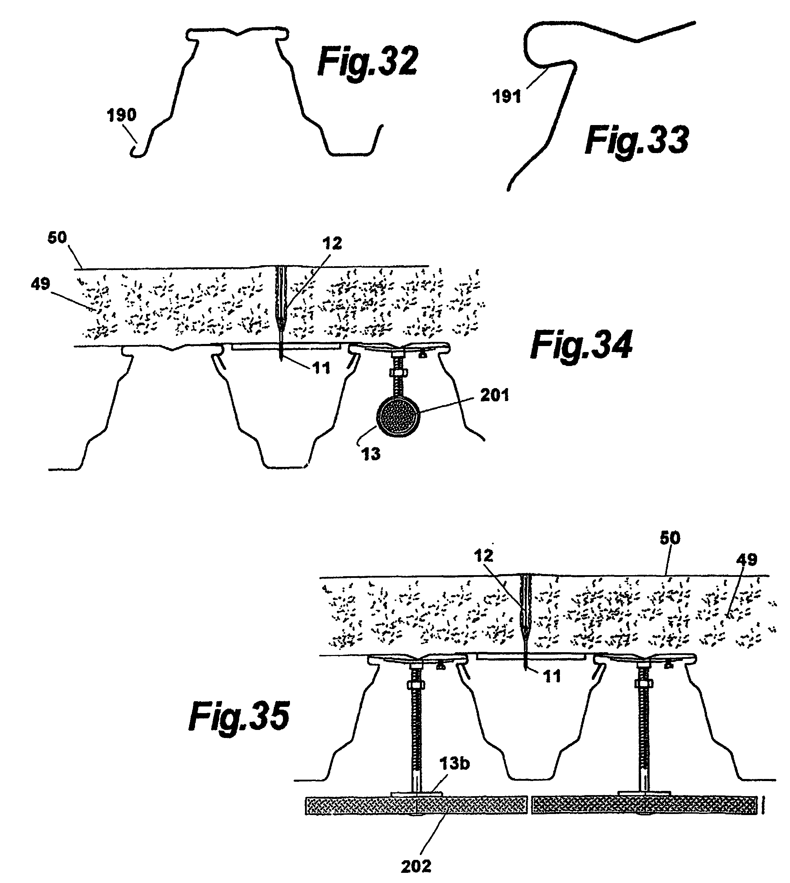

Die Figur 32 zeigt die Ausbildung des Randes eines Deckenelements. Zum Zwecke der Bildung einer Schubsicherung 190 sind die Randabschnitte als Hakenrand ausgebildet. Dies erleichtert die Verlegung der Deckenelemente im Verbund.

Figur 33 zeigt eine bevorzugte Ausgestaltung des Rückhaltemittels eines Deckenelements. Hier ist eine zur Sickenmitte und zum Scheitel aufgerichtete Steigung 191 vorgesehen, die z.B. bei entsprechender alternierender Ausbildung des Verriegelungselements die Verriegelungssicherheit erhöht
Figur 34 zeigt ein Einsatzbeispiel des erfindungsgemäßen Systems für die Montage von mit 201 bezeichnete Wasserrohre unterhalb der Gebäudedecke.
Figur 35 zeigt ein Einsatzbeispiel des erfindungsgemäßen Systems für die Montage von mit 202 bezeichneten eloxierten Aluprofilen unterhalb der Gebäudedecke.

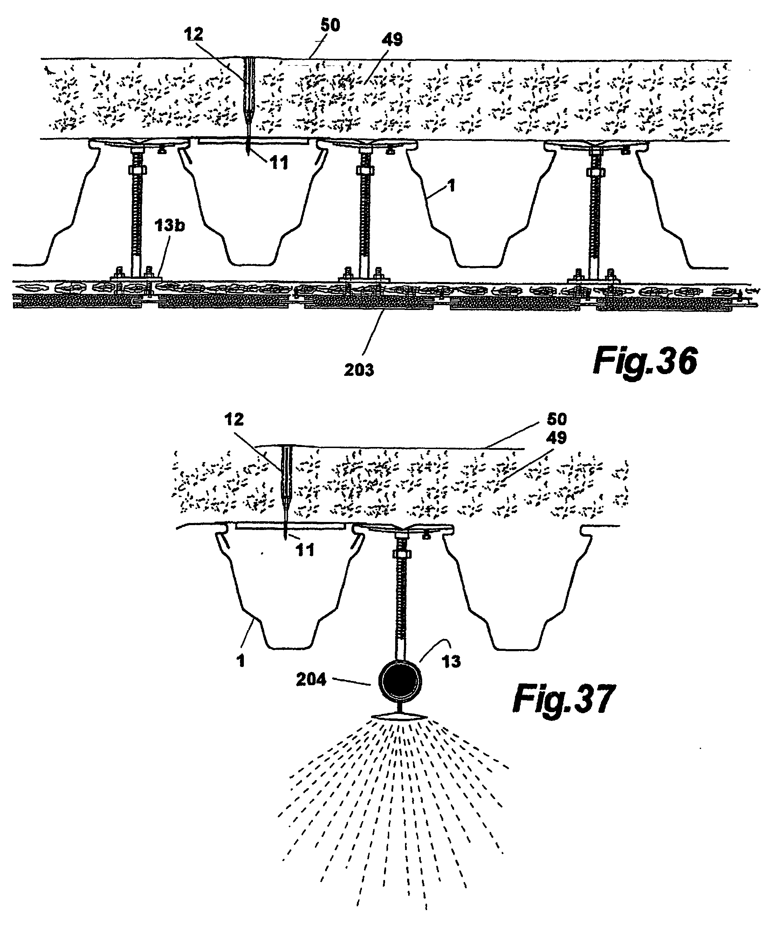

Figur 36 zeigt ein Einsatzbeispiel des erfindungsgemäßen Systems für die Montage von einer mit 203 bezeichneten Paneeldecke.
Figur 37 zeigt ein Einsatzbeispiel des erfindungsgemäßen Systems für die Montage von einer mit 204 bezeichneten unter der Gebäudedecke abgehängten Sprinkleranlage.

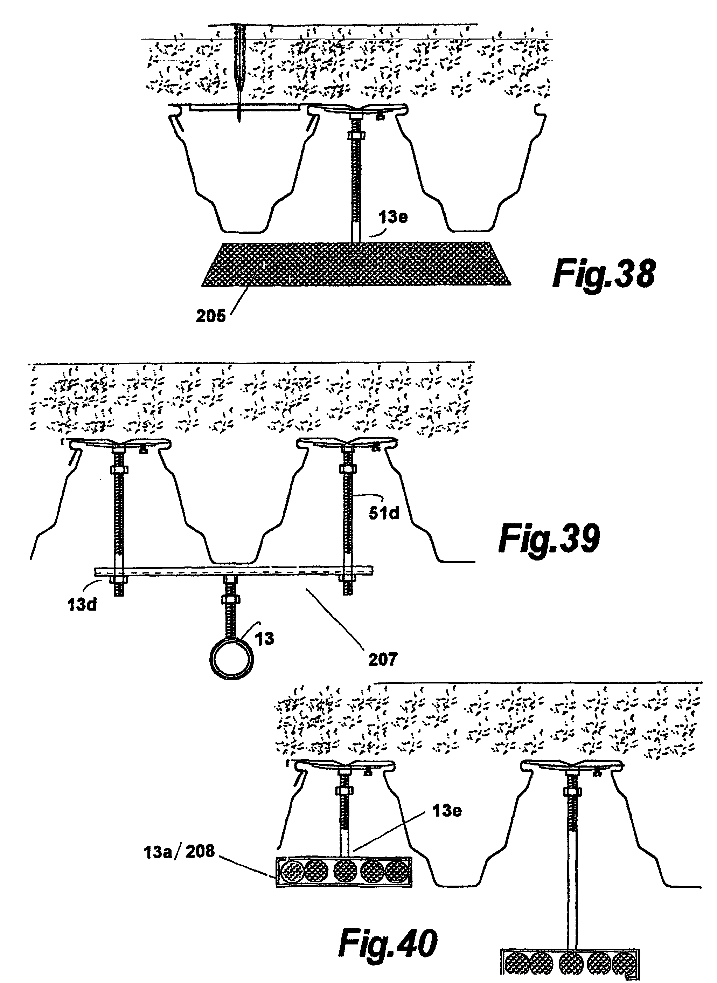

Figur 38 zeigt ein Einsatzbeispiel des erfindungsgemäßen Systems für die Montage von einer mit 205 bezeichneten Beleuchtung.
Figur 39 zeigt eine Lastaufhängung 207. Je nach Statik können eine Vielzahl von Abhängelementen 51d eingesetzt werden.
Figur 40 zeigt ein Einsatzbeispiel des erfindungsgemäßen Systems für die Montage von mit 208 bezeichneten Kabelkanälen.

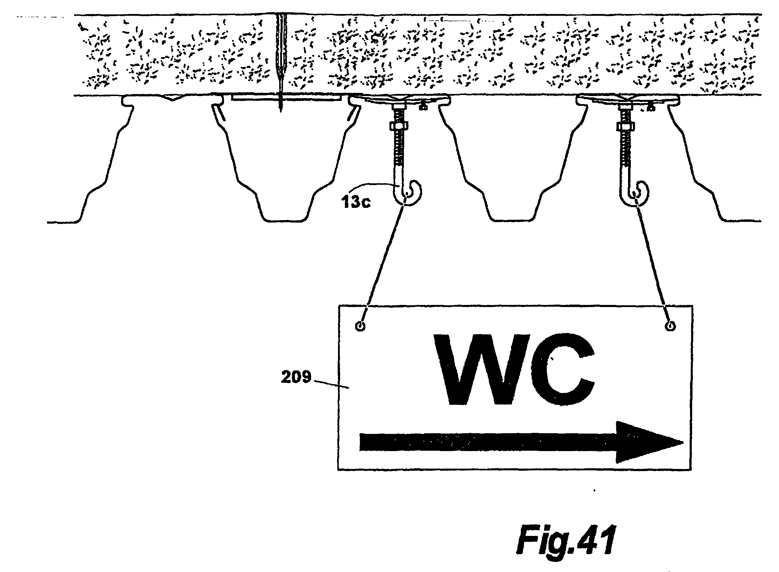

Figur 41 gibt eine abgehängte Beschilderung 209 wieder.

Die beispielhaft beschriebenen Verriegelungselemente können zumindest teilweise sowohl für die Montage auf der Gebäudeaußenseite als auch innerhalb des Gebäudes eingesetzt werden.

## Patentansprüche

1. Dach- und Deckensystem für Flachdachgebäude deren Dachfläche bevorzugt durch Deckenelemente (1) insbesondere in Form von Trapezprofilblechen oder dergleichen gebildet ist, die auf der Gebäudeaußenseite mit insbesondere mechanisch befestigbaren Dämmmaterialien (49) und Dichtungsbahnen (50) belegbar sind, und/oder an deren in den Gebäudeinnenraum gerichteten Deckenunterseite bevorzugt abgehängte Konstruktionen und Installationen, insbesondere Zwischendecken, Rohre, Kabel, Kabelkanäle, Beleuchtungen, Beschilderungen und dergleichen befestigbar sind, wobei das Dach- und Deckensystem aus mindestens einem Deckenelement (1) und aus mindestens einem schraublos mit dem Deckenelement (1) verbindbaren Verriegelungselement (3,3a,3b,3c,3d,4,4a,4b,4d,4e) besteht, wobei das Deckenelement (1) ein Klemm- und Verriegelungsdachprofilblech ist, das in seiner Profilwand eingeformte Hinterschneidungen, Nasen oder Rückhaltemittel (7,8) besitzt, die sowohl von der Gebäudeinnenseite als auch von der Gebäudeaußenseite her zugänglich und von dem in das Deckenelement (1) einsetzbaren Verriegelungselement (3,3a,3b,3c,3d,4,4a,4b, 4d,4e) formschlüssig hintergreifbar sind, **dadurch gekennzeichnet, dass** das Verriegelungselement (3,3a,3b,3c,3d) für die dachaußenseitige Montage als Klemmlasche ausgebildet ist, die mindestens eine von einer Schraube (11) des Befestigungselementes (12) für die Montage von auf dem Flachdach aufzulegende Dämm- und Dichtungsmaterialien (49,50) erfassbare Platte (14,81,82,153,167,167a) besitzt, an der die die Hinterschneidungen, Nasen oder Rückhaltemittel (7,8) des als Klemm- und Verriegelungsdachprofilblech ausgebildete Deckenelement (1) hintergreifbaren Retentionsabschnitte (29.30,87,88,151,152,161.162,161a,162a) angeordnet sind und die gegenüber den Hinterschneidungen, Nasen oder Rückhaltemittel (7,8) in eine Verriegelungsstellung positionierbar sind und dass die Hinterschneidungen, Nasen oder Rückhaltemittel (7,8) nahe des Sickenscheitels (53) des Deckenelements (1) angeordnet sind.

2. Dach- und Deckensystem nach Anspruch 1, **dadurch gekennzeichnet, dass** das Deckenelement (1) im wesentlichen aus einem Trapezprofilblech mit parallel ausgerichteten Hoch- und Tiefsicken (10,9) besteht, in dessen Profilflanken (5,6) die Hinterschneidungen, Nasen oder Rückhaltemittel (7,8) eingeformt sind und sich in Sickenlängsrichtung erstrecken.

3. Dach- und Deckensystem nach einem der Ansprüche 1 und 2, **dadurch gekennzeichnet, dass** die Hinterschneidungen, Nasen oder Rückhaltemittel (7,8) im Bereich einer Hochsicke (10) jeweils eine Tasche (31) und im Bereich einer Tiefsicke (9) jeweils eine Nische (32) bilden, wobei jeweils zwei parallel in einer Sicke benachbarte Taschen (31) oder jeweils zwei parallel in einer Sicke benachbarte Nischen (32) ein Rückhaltemittelpaar für mindestens ein in die jeweilige Sicke einsetzbares und dieses Paar hintergreifendes Verriegelungselement (3,3a,3b,3c,3d,4,4a,4b,4d,4e) bilden.

4. Dach- und Deckensystem nach einem der Ansprüche 1 bis 3, **dadurch gekennzeichnet, dass** die Hinterschneidungen, Nasen oder Rückhaltemittel (7,8) über die Wandseiten der Profilflanken (5,6) zur Sickenmitte hin über- oder hervorstehen.

5. Dach- und Deckensystem nach einem der vorstehenden Ansprüche, **dadurch gekennzeichnet, dass** das Verriegelungselement (3,3a,3b,3c,3d und/oder 4,4a,4b,4d,4e) in der Sicke (9,10) oder Nut (64) des Deckenelements (1) verkeilbar oder verspannbar ist.

6. Dach- und Deckensystem nach einem der vorstehenden Ansprüche, **dadurch gekennzeichnet, dass** das Verriegelungselement (3 und/oder 4,4b,4e) in der Sicke (9,10) oder Nut (64) des Deckenelements (1) verdrehbar ist.

7. Dach- und Deckensystem nach einem der vorstehenden Ansprüche, **dadurch gekennzeichnet, dass** das Verriegelungselement (3a und/oder 4a,4d,4e) in der Sicke (9,10) oder Nut (64) des Deckenelements (1) expandierbar ist.

8. Dach- und Deckensystem nach einem der vorstehenden Ansprüche, **dadurch gekennzeichnet, dass** das Verriegelungselement (3,3a,3b,3c,3d,4,4a,4b,4d,4e) die Hinterschneidungen, Nasen oder Rückhaltemittel (7,7a,8,8a) des Deckenelements (1) hintergreifbare Retentionsabschnitte (29,30)(56,57)(87,88)(97,98)(105,106)(151,152)(161,162) (181,182)(186,187) besitzt, die gegenüber den Hinterschneidungen, Nasen oder Rückhaltemittel (7,7a,8,8a) in eine Verriegelungsposition verstell-, verdrehverschiebbar oder einklipsbar sind.

9. Dach- und Deckensystem nach einem der vorstehenden Ansprüche, **dadurch gekennzeichnet, dass** die Retentionsabschnitte (29,30) (56,57)(87,88)(97,98)(105,106)(151,152)(161,162)(186,187) einstückig mit dem Verriegelungselement (3,3a,3b,3c,3d,4,4a,4b,4e) ausgebildet sind.

10. Dach- und Deckensystem nach einem der vorstehenden Ansprüche, **dadurch gekennzeichnet, dass** die Retentionsabschnitte (29,30) (56,57)(87,88)(97,98)(105,106) an den Stirnseiten des Verriegelungselementes (3,3a,4,4a,4b,4e) angeordnete Laschen oder Leisten sind.

11. Dach- und Deckensystem nach einem der vorstehenden Ansprüche, **dadurch gekennzeichnet, dass** die Retentionsabschnitte (151,152)(161.162) federnd elastische Zungen sind.

12. Dach- und Deckensystem nach einem der vorstehenden Ansprüche, **dadurch gekennzeichnet, dass** das Verriegelungselement (3,3a,3b,3c,3d,4,4a,4b,4d,4e) solche Retentionsabschnitte (29,30) (56,57) (87,88) (97,98) (105,106) (151,152) (161,162) (181,182) (186,187) besitzt, die durch Verstellung gegenüber dem Verriegelungselement oder durch Verstellung des Verriegelungselements (3,3a,3b,3c,3d,4,4a,4b,4d,4e) selbst oder Teile dessen gegenüber den Hinterschneidungen, Nasen oder Rückhaltemittel (7,8,7a,8a) des Deckerielements (1) in eine Sperrstellung positionierbar sind.

13. Dach- und Deckensystem nach einem der vorstehenden Ansprüche, **dadurch gekennzeichnet, dass** das Verriegelungselement (3,4,4b) eine einteilige Platte (14,34,34a) ist, wobei die Retentionsabschnitte (29,30)(56,57)(105,106)(186,187) durch die stimrandseitigen Sektoren der Platte (14,34,34a) gebildet sind, die durch Verdrehung der Platte (14.34.34a) gegenüber den Hinterschneidungen, Nasen oder Rückhaltemittel (7,8,7a,8a) des Deckenelements (1) in eine Sperrstellung positionierbar sind.

14. Dach- und Deckensystem nach einem der vorstehenden Ansprüche, **dadurch gekennzeichnet, dass** das Verriegelungselement (3,4,4b,4e) im wesentlichen rechteckförmig oder oval ausgebildet ist und zwischen den Hinterschneidungen, Nasen oder Rückhaltemittel (7,8,7a,8a) hindurch in das Deckenelement (1) bis über bzw. unterhalb der Hinterschneidungen, Nasen oder Rückhaltemittel (7,8,7a,8a) hinaus eingesetzt und um die eigene Vertikalachse (28,54,54a,110) bis zur Hintergreifung der Hinterschneidungen, Nasen oder Rückhaltemittel (7,8,7a,8a) mit seinen Retentionsabschnitten (29,30)(56,57)(105,106)(186,187) verdreht wird, wobei das Verriegelungselement (3,4,4b,4e) Schmalseiten (15,16)(35,36)(35a,35b) (119,120) und Längsseiten (17,18)(37,38)(37a,38a)(121,122) besitzt, und wobei die Schmalseiten (15,16)(35,36)(35a,35b) (119,120) kleiner und die Längsseiten (17,18)(37,38)(37a,38a)(121,122) größer dimensioniert sind als der lichte Abstand zwischen zwei benachbarten Hinterschneidungen, Nasen oder Rückhaltemittel (7.8,7a.8a) des Deckenelements (1).

15. Dach- und Deckensystem nach einem der vorstehenden Ansprüche, **dadurch gekennzeichnet, dass** zwei diagonal benachbarte Eckbereiche des Verriegelungselementes (3,4,4b,4e) jeweils mit einem Radius (21,22)(41,42)(41a,42a)(117,118) und die beiden anderen diagonal benachbarten Eckbereiche jeweils mit einer weitestgehend spitzen Kante (19,20)(39,40)(39a,40a)136,137) ausgebildet sind, wobei die Anordnung der mit Radius (21,22)(41,42)(41a,42a)(117,118) und spitzen Kanten (19,20)(39,40)(39a,40a)136,137) ausgebildeten Eckbereiche so gewählt ist, dass unter Berücksichtigung der horizontalen Drehrichtung des Verriegelungselementes (3,4,4b,4e) die zuerst auf eines der Hinterschneidungen, Nasen oder Rückhaltemittel (7,8,7a,8a) des Deckenelements (1) zulaufenden Eckbereiche abgerundet sind.

16. Dach- und Deckensystem nach einem der vorstehenden Ansprüche, **dadurch gekennzeichnet, dass** die Längsseiten (17,18)(37,38)(37a,38a)(121,122) des Verriegelungselements (3,4,4b,4e) gegenüber dem lnnenquerschnitt der Sicke (9.10) oder der Nut (64) des Deckenelements (1) ein geringes Übermaß aufweisen.

17. Dach- und Deckensystem nach einem der vorstehenden Ansprüche, **dadurch gekennzeichnet, dass** das Verriegelungselement (3,4,4b) eine von der Planizität abweichende Formgebung besitzt.

18. Dach- und Deckensystem nach einem der vorstehenden Ansprüche, **dadurch gekennzeichnet, dass** das Verriegelungselement (3,4) konkav oder konvex gewölbt ist.

19. Dach- und Deckensystem nach einem der vorstehenden Ansprüche, **dadurch gekennzeichnet, dass** das Verriegelungselement wellenförmig ausgebildet ist.

20. Dach- und Deckensystem nach einem der vorstehenden Ansprüche, **dadurch gekennzeichnet, dass** das Verriegelungselement (33b,3c,4) Versteifungsrippen (25,26) oder Stege (23,24) besitzt.

21. Dach- und Deckensystem nach einem der vorstehenden Ansprüche, **dadurch gekennzeichnet, dass** das Verriegelungselement (4,4a,4b,4d,4e) für die dachinnenseitige Montage das Kopfteil eines Abhängelements (51,51a-d) bildet, wobei unterhalb dem Verriegelungselement (4,4a,4b,4d,4e) ein sich weitestgehend vertikal erstreckendes Distanzstück (46) angeordnet ist, das an seinem freien Ende ein Befestigungsmittel (13) für die unterhalb des Deckenelements (1) anzuordnende Konstruktionen und Installationen aufweist.

22. Dach- und Deckensystem nach einem der vorstehenden Ansprüche, **dadurch gekennzeichnet, dass** das Distanzstück (46) lösbar am Verriegelungselement (4,4a,4b,4d,4e) angeordnet ist

23. Dach- und Deckensystem nach einem der vorstehenden Ansprüche, **dadurch gekennzeichnet, dass** zwischen dem Distanzstück (46) und dem Verriegelungselement (4,4a,4b.4d,4e) eine Schraubverbindung (45 o. 11,52) ausgebildet ist.

24. Dach- und Deckensystem nach einem der vorstehenden Ansprüche, **dadurch gekennzeichnet, dass** das Verriegelungselement (4,4a,4b,4d,4e) vom Distanzstück (46) durchdringbar ist, wobei das Distanzstück (46) eine Gewindestange ist die mit ihrer Stirnkuppe (55) über die dem Deckenelement (1) nahe Plattenoberkante (47) des jeweiligen Verriegelungselements (4,4a,4b,4d,4e) hinaus eindrehbar ist

25. Dach- und Deckensystem nach einem der vorstehenden Ansprüche, **dadurch gekennzeichnet, dass** das Verriegelungselement (4b) zwischen den Retentionsabschnitten (105.106) eine muldenförmige Vertiefung (109) besitzt.

26. Dach- und Deckensystem nach einem der vorstehenden Ansprüche, **dadurch gekennzeichnet, dass** das Befestigungsmittel (13,13a,13b,13c,13e) lösbar am Distanzstück (46) angeordnet ist.

27. Dach- und Deckensystem nach einem der vorstehenden Ansprüche, **dadurch gekennzeichnet, dass** das Befestigungsmittel (13) als Rohrschelle ausgebildet ist.

28. Dach- und Deckensystem nach einem der vorstehenden Ansprüche, **dadurch gekennzeichnet, dass** das Befestigungsmittel (13a) als Kabelkanal ausgebildet oder am Befestigungsmittel ein Kabelkanal (208) angeordnet ist.

29. Dach- und Deckensystem nach einem der vorstehenden Ansprüche, **dadurch gekennzeichnet, dass** das Befestigungsmittel (13b) als Montageplatte ausgebildet ist.

30. Dach- und Deckensystem nach einem der vorstehenden Ansprüche, **dadurch gekennzeichnet, dass** das Befestigungsmittel (13c) als Haken ausgebildet ist.

31. Dach- und Deckensystem nach einem der vorstehenden Ansprüche, **dadurch gekennzeichnet, dass** das freie Ende des Distanzstücks (46) als Befestigungsmittel (13,13d,13e) ausgebildet ist.

32. Dach- und Deckensystem nach einem der vorstehenden Ansprüche, **dadurch gekennzeichnet, dass** das Befestigungsmittel (13d) durch das mit einem Gewinde und einer Sicherungsmutter versehene freie Ende des Distanzstücks (46) gebildet ist

33. Dach- und Deckensystem nach einem der vorstehenden Ansprüche, **dadurch gekennzeichnet, dass** zwischen dem Verriegelungselement (3,4) und dem Distanzstück (46) und/oder dem Distanzstück (46) und dem Befestigungsmittel (13,13a-e) eine Höhenjustiervorrichtung angeordnet ist

34. Dach- und Deckensystem nach einem der vorstehenden Ansprüche, **dadurch gekennzeichnet, dass** das Verriegelungselement (3a,4a,4d) aus mindestens zwei zueinander relativ verstellbaren Platten oder Riegelteilen (81,82,91,92,171,172,173) besteht, deren gemeinsame Baulänge insbesondere durch ein Verschieben oder ein Verdrehen gegeneinander, kleiner als der lichte Abstand zwischen zwei in den Profilflanken (5,6) oder Nut (64) des Deckenelements (1,2) benachbart angeordnete Hinterschneidungen, Nasen oder Rückhaltemittel (7,8,7a,8a) einstellbar ist, das Verriegelungselement (3a,4a,4d) zwischen den Hinterschneidungen, Nasen oder Rückhaltemittel (7.8,7a,8a) hindurch in das Deckenelement (1,2) bis Ober bzw. unterhalb die die Hinterschneidungen. Nasen oder Rückhaltemittel (7,8,7a,8a) einsetzbar ist und insbesondere durch Verschieben oder Verdrehen der Riegelteile (81,82,91,92,171,172,173) zueinander die Hinterschneidungen, Nasen oder Rückhaltemittel (7,8,7a,8a) des Deckenelements (1) zumindest mit einem Teilabschnitt seiner Riegelteile hintergreift.

35. Dach- und Deckensystem nach einem der vorstehenden Ansprüche, **dadurch gekennzeichnet, dass** die Riegelteile (81,82) zwei übereinander verschieblich angeordnete und miteinander verschraub- oder fixierbare Einzelplatten sind.

36. Dach- und Deckensystem nach einem der vorstehenden Ansprüche, **dadurch gekennzeichnet, dass** die Riegelteile (91,92) zwei ineinander verschiebliche und miteinander verschraub- oder fixierbare Profile sind.

37. Dach- und Deckensystem nach einem der vorstehenden Ansprüche, **dadurch gekennzeichnet, dass** die die Riegelteile (91,92) bildenden Profile im wesentlichen einen U-förmigen Querschnitt besitzen.

38. Dach- und Deckensystem nach einem der vorstehenden Ansprüche, **dadurch gekennzeichnet, dass** in mindestens einem der Riegelteile (81,91) ein dieses durchsetzendes Langloch (84) angeordnet ist.

39. Dach- und Deckensystem nach einem der vorstehenden Ansprüche, **dadurch gekennzeichnet, dass** die Längsflanken des Langloches (84) eine Verzahnung (86) besitzen.

40. Dach- und Deckensystem nach einem der vorstehenden Ansprüche, **dadurch gekennzeichnet, dass** das Verriegelungselement (4d) mindestens einen Sperrriegel (171,172) besitzt, der unter Gegendruck mindestens einer Feder (174,175) orthogonal zur Vertikalachse des Verriegelungselementes (4d) rückstellbar ist, bis die gemeinsame Baulänge von Verriegelungselement (4d) und Sperrriegel (171,172) kleiner als der lichte Abstand zwischen zwei in den Profilflanken (5,6) des Deckenelements (1) benachbart angeordnete Hinterschneidungen, Nasen oder Rückhaltemittel (7,8,7a,8a) ist, das Verriegelungselement (4d) zwischen den Hinterschneidungen, Nasen oder Rückhaltemittel (7,8,7a,8a) hindurch in das Deckenelement (1) einsetzbar ist und das Verriegelungselement (4d) und/oder der Sperrriegel (171,172) bei Aussetzen der Rückstellkraft die Hinterschneidungen, Nasen oder Rückhaltemittel (7,8,7a,8a) des Deckenelements (1) zumindest mit einem Teilabschnitt hintergreifen.

41. Dach- und Deckensystem nach einem der vorstehenden Ansprüche, **dadurch gekennzeichnet, dass** das Verriegelungselement (4d) als Hohlkörper (173) ausgebildet ist und der/die Sperrriegel (171,172) innerhalb des Verriegelungselementes (4d) geführt ist/sind.

42. Dach- und Deckensystem nach einem der vorstehenden Ansprüche, **dadurch gekennzeichnet, dass** das Verriegelungselement (4d) an mindestens einem seiner zu den Profilflanken (5,6) oder den Nutinnenwänden des Deckenelements (1) parallel ausgerichteten Stirnseiten (173a,173b) mindestens eine Öffnung (173c,173d) besitzt

43. Dach- und Deckensystem nach einem der vorstehenden Ansprüche, **dadurch gekennzeichnet, dass** in mindestens eine der stirnseitigen Öffnungen (173c,173d) des Verriegelungselementes (4d) mindestens ein Sperrriegel (171,171) eingesetzt ist, auf dessen sich parallel zur Öffnung (173c,173d) erstreckenden innenliegenden Stirnfläche (173e.173f) sich mindestens eine Feder (174,175) abstützt.

44. Dach- und Deckensystem nach einem der vorstehenden Ansprüche, **dadurch gekennzeichnet, dass** im Boden (173g) des Verriegelungselementes (4d) mindestens eine Schlitzöffnung (173h,173i) angeordnet ist, zu der eine Aufnahme (173k,173l) am Sperrriegel (171,172) benachbart ist und die Schlitzöffnung (173h,173i) von einem in der Aufnahme befestigten Griffhebel /177,178) durchsetzt ist, der unterhalb des Bodens (173g) des Verriegelungselsments (4d) ausragt

45. Dach- und Deckensystem nach einem der vorstehenden Ansprüche, **dadurch gekennzeichnet, dass** die Aufnahme (173k,173l) am Sperrriegel ein Gewindeloch ist.

46. Dach- und Deckensystem nach einem der vorstehenden Ansprüche, **dadurch gekennzeichnet, dass** die Schlitzöffnung (173h,173i) an ihren Stirnenden geschlossen ist.

47. Dach- und Deckensystem nach einem der vorstehenden Ansprüche, **dadurch gekennzeichnet, dass** der Griffhebel (177,178) ein Gewindestift ist.

48. Dach- und Deckensystem nach einem der vorstehenden Ansprüche, **dadurch gekennzeichnet, dass** der Sperrriegel (171,172) auf seiner innenliegenden Stirnfläche (173e,173f) mindestens eine für die Federaufnahme geeignete Hülse oder Bolzen (173m) trägt

49. Dach- und Deckensystem nach einem der vorstehenden Ansprüche, **dadurch gekennzeichnet, dass** das Verriegelungselemeni (4e) mindestens einen die Hinterschneidungen, Nasen oder Rückhaltemittel (7,8,7a,8a) des Deckenelements (1) hintergreifbaren Riegel (184,185) besitzt, der durch eine relative lineare Bewegung zum Verriegelungselement (4e) gegenüber den Hinterschneidungen, Nasen oder Rückhaltemittel (7,8,7a,8a) in eine Sperrposition verstell- und fixierbar ist.

50. Dach- und Deckensystem nach einem der vorstehenden Ansprüche, **dadurch gekennzeichnet, dass** der Riegel (184,185) ein über eine der Stirnseiten (125,126) des Verriegelungselementes (4e) ausfahrbare Zahnstange ist, die mit einem von der Verriegelungselementunterseite zugänglichen Stellrad (138) in Wirkverbindung steht.

51. Dach- und Deckensystem nach einem der vorstehenden Ansprüche, **dadurch gekennzeichnet, dass** das Distanzstück (46) auf seiner den Rackhaltemitteln (7,8.7a,8a) nahen Stirnkuppe (55) einen Druckkopf (140,140a,140b) trägt.

52. Dach- und Deckensystem nach einem der vorstehenden Ansprüche, **dadurch gekennzeichnet, dass** der Druckkopf (140.140a.140b) zumindest teilweise die Flächenstruktur der Innenseite des Blechscheitels (53) oder des Nutenscheitels des Deckenelements (1) besitzt.

53. Dach- und Deckensystem nach einem der vorstehenden Ansprüche, **dadurch gekennzeichnet, dass** der Druckkopf (140,140a,140b) gegenüber dem Distanzstück (46) relativ horizontal verdrehbar ist.

54. Dach- und Deckensystem nach einem der vorstehenden Ansprüche, **dadurch gekennzeichnet, dass** der Druckkopf (140.140a.140b) auf einem Kugelzapfen (138) des Distanzstückes (46) befestigt ist

55. Dach- und Deckensystem nach einem der vorstehenden Ansprüche, **dadurch gekennzeichnet, dass** der Druckkopf (140.140a.140b) aus Kunststoff, einem Gummiwerkstoff oder einem metallischen Werkstoff besteht.

56. Dach- und Deckensystem nach einem der vorstehenden Ansprüche, **dadurch gekennzeichnet, dass** zwischen Druckkopf (140,140a,140b) und Blechscheitel (53) eine drehfeste Formschlussverbindung herstellbar ist, wobei zwischen Druckkopf (140,140a,140b) und Verriegelungselement (4b) eine Drehverriegelung ausgebildet ist

57. Dach- und Deckensystem nach einem der vorstehenden Ansprüche, **dadurch gekennzeichnet, dass** die Drehverriegelung zwischen Druckkopf und Verriegelungselement durch mindestens eine am Druckkopf (140,140a,140b) angeordnete und das Verriegelungselement (4b) zumindest teilweise umgreifende Schürze (145) gebildet ist

58. Dach- und Deckensystem nach einem der vorstehenden Ansprüche, **dadurch gekennzeichnet, dass** die Drehverriegelung zwischen Druckkopf (140b) und Verriegelungselement (4b) durch am Druckkopf angeordnete, in Bohrungen (148,149) des Verriegelungselements (4b) geführte Sperrstifte (146,147) gebildet ist

59. Dach- und Deckensystem nach einem der vorstehenden Ansprüche, **dadurch gekennzeichnet, dass** der Druckkopf eine Platte ist

60. Dach- und Deckensystem nach mindestens einem der vorstehenden Ansprüche, **dadurch gekennzeichnet, dass** der Druckkopf (140a) ein Formteil ist.

61. Dach- und Deckensystem nach einem der vorstehenden Ansprüche, **dadurch gekennzeichnet, dass** die Platte (153) eine sich in Sickenlängsrichtung oder sich quer über mindestens zwei Tiefsicken des als Klemm- und Verriegelungsdachprofilblech ausgebildete Deckenelement (1) erstreckende Leiste ist.

62. Dach- und Deckensystem nach einem der vorstehenden Ansprüche, **dadurch gekennzeichnet, dass** die Retentionsabschnitte (151,152) entsprechend dem Sickenabstand Deckenelements (1) an der Plattenunterseite oder am Plattenrand angeordnet sind.

63. Dach- und Deckensystem nach einem der vorstehenden Ansprüche, **dadurch gekennzeichnet, dass** das als Klemmlasche ausgebildete Verriegelungselement (3b) ein in die Tiefsicke des Deckenelements (1) einragendes Spannelement (155) trägt, das auf dem Sickenboden (159) abstützbar oder zwischen den Profilflanken (5,6) des Deckenelements (1) verkeilbar ist.

64. Dach- und Deckensystem nach einem der vorstehenden Ansprüche, **dadurch gekennzeichnet, dass** die Platte (153) auf ihrer der Tiefsicke nahen Unterseite einen zur Plattenoberseite hin offenen Gewindekanal (156) besitzenden Gewindestutzen (156a) aufweist und dass das Spannelement (155) eine mit einem Schraubkopf (155a) auf der einen und mit einer Druckplatte (155b) auf der anderen Seite versehene Gewindestange ist, die im Gewindestutzen (156a) der Platte (153) mit ihrem Schraubkopf (155a) höhenverstellbar aufgenommen ist.

65. Dach- und Deckensystem nach einem der vorstehenden Ansprüche, **dadurch gekennzeichnet, dass** die Platte (153,167,167a) des Verriegelungselements (3b,3c,3d) solche Retentionsabschnitte oder Retentionselemente besitzt, die durch Eindrücken der Platte in die Sicke (9) des Deckenelements (1), gegenüber den Hinterschneidungen, Nasen oder Rückhaltemittel (7,8) des Deckenelements (1) in eine Sperrstellung positionierbar sind.

66. Dach- und Deckensystem nach einem der vorstehenden Ansprüche, **dadurch gekennzeichnet, dass** die Platte (167) des Verriegelungselements (3c) an ihren den Rückhaltemitteln (7,8) des Deckenelements (1) nahen Randseiten die Rückhaltemittel (7,8) zu mindest teilweise umgreifende Keder (165,166) besitzt

67. Dach- und Deckensystem nach einem der vorstehenden Ansprüche, **dadurch gekennzeichnet, dass** das als Klemmlasche ausgebildete Verriegelungselement (3d) einen im wesentlichen trapezförmigen Querschnitt besitzt und durch Aufweiten der Sickenöffnung und Verdrängung der Hinterschneidungen, Nasen oder Rückhaltemittel (7,8) durch die Sickenöffnung hindurch in die Tiefsicke (9) des Deckenelements (1) eindrückbar ist und unterhalb den in ihre Ausgangslage zurückgefederten Hinterschneidungen, Nasen oder Rückhaltemittel (7,8) positionierbar ist und sich zumindest mit einem Teilabschnitt seiner Stirnseiten auf den Sickenflanken (5,6) abstützt.

68. Dach- und Deckensystem nach einem der vorstehenden Ansprüche, **dadurch gekennzeichnet, dass** zwischen den einzelnen als Klemmund Veriegelungsdachprofilblechen ausgebildeten Deckenelementen (1) eine Schubsicherung (190) ausgebildet ist.

69. Dach- und Deckensystem nach einem der vorstehenden Ansprüche, **dadurch gekennzeichnet, dass** zumindest die Längsrandseiten des Deckenelements (1) als Hakenrand ausgebildet sind.

70. Dach- und Deckensystem nach einem der vorstehenden Ansprüche, **dadurch gekennzeichnet, dass** die durch die Hinterschneidungen, Nasen oder Rückhaltemittel (7,8) gebildeten Taschen mit einer zur Sicken- oder Nutmitte hin ansteigenden Schrägfläche (191) ausgebildet sind.

71. Dach- und Deckensystem nach einem der vorstehenden Ansprüche, **dadurch gekennzeichnet, dass** in die Sicken mindestens eine Spannpratze eingesetzt ist.

72. Dach- und Deckensystem nach einem der vorstehenden Ansprüche, **dadurch gekennzeichnet, dass** das Deckenelement (1) durch Umformung eines Trapezprofilbleches gebildet ist, dessen Profilwand an den gewüschten Stellen zu Hinterschneidungen, Nasen oder Rückhaltemittel (7,8) verformt wird.

73. Dach- und Deckensystem nach einem der vorstehenden Ansprüche, **dadurch gekennzeichnet, dass** das Deckenelement (1) eine verlorene Schalung bildet

## Claims

1. Roof-and-floor system for flat-roof buildings the roof surface of which is composed preferably of floor members (1), especially in the form of trapezoidal sheeting or similar, that can be overlaid - especially by mechanical means - onto the external building surface with insulating material (49) and waterproof sheeting (50) and/or to the floor internal surface of which, i.e. the surface directed towards the interior of the building, certain structures and installations can be affixed, preferably of the suspended type, such as inserted floors, tubes, cables, cable ducts, lighting, marking, or similar, with the roof-and-floor system being composed of at least one floor member (1) and of at least one locking member (3,3a,3b,3c,3d,4,4a,4b,4d,4e) engaging in a screwless configuration in the floor member (1), with the floor member (1) being a clamping or locking roofing sectional sheet provided with undercuts, cogs or retaining means (7,8) incorporated by moulding in its sectional wall that are accessible from both the building interior and exterior surfaces and behind which the locking member (3,3a, 3b,3c,3d,4,4a,4b, 4d,4e) to be inserted into the floor member (1) engages in a positive configuration, wherein the locking member (3,3a,3b,3c,3d) has the form of a clamping lug which, with a view to enabling its assembly on the exterior surface of the roof, has at least one plate (14,81,82,153,167,167a) designed in such a way as to enable a screw of the fastening member (12) used to lay insulation and sealing materials (49,50) on the flat roof to engage therein and on which the retaining sections (29, 30,87, 88, 151, 152,161,162,161a,162a) are arranged in such a way as to engage behind the undercuts, cogs or retaining means (7,8) of the floor member (1) having the form of a clamping or locking roofing sectional sheet, on the one hand, and as to enable their being moved into an interlocking position with regard to the undercuts, cogs or retaining means (7,8), on the other, and wherein the undercuts, cogs or retaining means (7,8) are arranged next to the vertex of the knuckle (53) of the floor member (1).

2. Roof-and-floor system according to Claim 1, wherein the floor member (1) is composed mainly of a trapezoidal sectional sheeting with high and deep knuckles (10,9) aligned in parallel and with the undercuts, cogs or retaining means (7,8) being moulded into its sectional flanks (5,6) and extending in the longitudinal direction of the knuckles.

3. Roof-and-floor system according to either or all of Claims 1 and 2, wherein each of the undercuts, cogs or retaining means (7,8) forms a pocket (31) in the zone of the high knuckle (10), and a recess (32) in the zone of deep knuckle (9), wherein each pair of adjacent pockets of (31) arranged in parallel in a knuckle, or each pair of adjacent recesses (32) arranged in parallel in a knuckle, forms a pair of retaining means for at least one locking member (3,3a,3b, 3c,3d,4,4a,4b,4d,4e) inserted into the relevant knuckle and engaging behind such pair of retaining means.

4. Roof-and-floor system according to either or all of Claims 1 to 3, wherein the undercuts, cogs or retaining means (7,8) protrude beyond the wall sides of the sectional flanks (5,6) in the direction of the knuckle centre.

5. Roof-and-floor system according to either or all of the claims hereinbefore referred to, wherein the locking member (3,3a,3b, 3c,3d, and/or 4,4a,4b,4d,4e) can be wedged or clamped in the knuckle (9,10) or groove (64) of the floor member (1).

6. Roof-and-floor system according to either or all of the claims hereinbefore referred to, wherein the locking member (3 and/or 4,4d,4e) can be rotated in the knuckle (9,10) or groove (64) of the floor member (1).

7. Roof-and-floor system according to either or all of the claims hereinbefore referred to, wherein the locking member (3 and/or 4,4d,4e) can be expanded in the knuckle (9,10) or groove (64) of the floor member (1).

8. Roof-and-floor system according to either or all of the claims hereinbefore referred to, wherein the locking member (3,3a,3b, 3c,-3d.4,4a,4b.4d.4e) has retaining sections (29,30)(56,57) (87,88)(97,98)(105,106)(151,152)(161,162)(181,182)(186,187) engaging behind the undercuts, cogs or retaining means (7,7a,8,8a) of the floor member (1) that can be brought into an adjustable, rotatable, displaceable or clickable locking position with regard to the undercuts, cogs or retaining means (7,7a,8,8a).

9. Roof-and-floor system according to either or all of the claims hereinbefore referred to, wherein the retaining sections (29,30) (56,57)(87,88)(97,98)(105,106)(151,152)(161,162)(186,187) form a single piece with the locking member (3,3a,3b, 3c,3d, 4,4a,4b, 4d,4e).

10. Roof-and-floor system according to either or all of the claims hereinbefore referred to, wherein the retaining sections (29,30) (56,57)(87,88)(97,98)(105,106) have the form of brackets or rails arranged at the front sides of the locking member (3,3a,4,4a,4b, 4e).

11. Roof-and-floor system according to either or all of the claims hereinbefore referred to, wherein the retaining sections (151,152) (161,162) have the form of resilient tongues.

12. Roof-and-floor system according to either or all of the claims hereinbefore referred to, wherein the locking member (3,3a,3b, 3c,-3d,4,4a,4b,4d.4e) has retaining sections (29,30) (56,57) (87,88)(97,98)(105,106)(151.152)(161,162)(181,182)(186,187) of such a type as to enable their being moved into a locking position with regard to the undercuts, cogs or retaining means (7,8,7a,8a) either by displacement with regard to the locking member or by displacement of the locking member (3,3a,3b, 3c,3d,4,4a, 4b,4d, 4e) itself or of any part thereof.

13. Roof-and-floor system according to either or all of the claims hereinbefore referred to, wherein the locking member (3,4,4b) has the form of a one-piece plate (14,34,34a), with the retaining sections (29,30) (56,57)(105,106)(186,187) being formed by the front-edge sectors of the plate (14,34,34a) that can be moved into a locking position by rotating the plate (14,34,34a) with regard to the undercuts, cogs or retaining means (7,8,7a,8a) of the floor member (1).

14. Roof-and-floor system according to either or all of the claims hereinbefore referred to, wherein the locking member (3,4,4b,4e) has a substantially rectangular or oval form and is mounted in such a way between the undercuts, cogs or retaining means (7,8, 7a,8a) onto the floor member (1) as to project above, or below respectively, the undercuts, cogs or retaining means (7,8,7a, 8a) and as to be subsequently rotated, by its retaining sections (29,30) (56,57)(105,106)(186,187) around its vertical axis, until engaging behind the undercuts, cogs or retaining means (7,8,7a,8a), with the locking member (3,4,4b,4e) having narrow sides (15,16) (35.36)(35a,35b)(119,120) and long sides (17,18)(37,38)(37a,38a) (121,122), and with the dimensions of the narrow sides (15,16) (35,36)(35a,35b)(119,120) being smaller, and those of the long sides (17,18)(37,38)(37a,38a)(121,122) greater, than the clearance between two adjacent undercuts, cogs or retaining means (7, 8,7a,8a) of the floor member (1).

15. Roof-and-floor system according to either or all of the claims hereinbefore referred to, wherein two diagonally adjacent comer zones of the locking member (3,4,4b,4e) have a radius (21,22) (41,42)(41a,42a)(117,118) each and the other two diagonally adjacent comer zones have a substantially pointed edge (19,20) (39,40)(39a,40a)(136,137) each, with the layout of the comer zones having radiuses (21,22)(41,42)(41a,42a)(117,118) and pointed edges (19,20)(39,40)(39a,40a)(136,137) being chosen in such a way, in consideration of the horizontal sense of rotation of the locking member (3,4,4b,4e), as to make sure that the certain corner zones coming first into contact with either of the undercuts, cogs or retaining means (7,8,7a,8a) of the floor member (1) have a rounded edge.

16. Roof-and-floor system according to either or all of the claims hereinbefore referred to, wherein the long sides (17,18)(37,38) (37a,38a)(121,122) of the locking member (3.4,4b.4e) have a slight overmeasure with regard to the inside cross section of the knuckle (9,10) or groove (64) of the floor member (1).

17. Roof-and-floor system according to either or all of the claims hereinbefore referred to, wherein the locking member (3,4,4b) has a form slightly in deviation from flatness.

18. Roof-and-floor system according to either or all of the claims hereinbefore referred to, wherein the locking member (3,4) has a concave or convex shape.

19. Roof-and-floor system according to either or all of the claims hereinbefore referred to, wherein the locking member has a waveform.

20. Roof-and-floor system according to either or all of the claims hereinbefore referred to, wherein the locking member (3,3b,3c,4) has reinforcing ribs (25,26) or webs (23,24).

21. Roof-and-floor system according to either or all of the claims hereinbefore referred to, wherein the locking member (4,4a,4b,4d,4e), with regard to the assembly to the internal surface of the roof, forms the head-portion of a suspension member (51,51a-d), with a spacer (46) being arranged below the locking member (4,4a,4b, 4d,4e) which extends substantially in the vertical direction and the free end of which has a fastener (13) for the structures and installations to be arranged underneath the floor member (1).

22. Roof-and-floor system according to either or all of the claims hereinbefore referred to, wherein the spacer (46) is arranged in a dismountable configuration to the locking member (4,4a;4b,4d,4e).

23. Roof-and-floor system according to either or all of the claims hereinbefore referred to, wherein a screwed joint (45 or 11,52) is provided between the spacer (46) and the locking member (4,4a,4b, 4d,4e).

24. Roof-and-floor system according to either or all of the claims hereinbefore referred to, wherein the spacer (46) is allowed to pass through the locking member (4,4a,4b,4d,4e), with the spacer (46) being provided in the form of a threaded rod which can be screwed into and through the slab (47) of the locking member (4,4a,4b, 4d,4e) in such a way as to have its front cone project beyond the slab upper edge that is situated next to the floor member (1).

25. Roof-and-floor system according to either or all of the claims hereinbefore referred to, wherein the locking member (4b) has a trough-shaped cavity (109) between the retaining sections (105,106).

26. Roof-and-floor system according to either or all of the claims hereinbefore referred to, wherein the fastener (13,13a,13b,13c,13e) is arranged in a dismountable configuration to the spacer (46).

27. Roof-and-floor system according to either or all of the claims hereinbefore referred to, wherein the fastener (13) is provided in the form of a pipe clip.

28. Roof-and-floor system according to either or all of the claims hereinbefore referred to, wherein the fastener (13a) is provided in the form of a cable duct or wherein a cable duct (208) is arranged to the fastener.

29. Roof-and-floor system according to either or all of the claims hereinbefore referred to, wherein the fastener (13b) is provided in the form of a mounting plate.

30. Roof-and-floor system according to either or all of the claims hereinbefore referred to, wherein the fastener (13c) is provided in the form of a hook.

31. Roof-and-floor system according to either or all of the claims hereinbefore referred to, wherein the free end of the spacer (46) is provided in the form of a fastener (13,13d,13e).

32. Roof-and-floor system according to either or all of the claims hereinbefore referred to, wherein the fastener (13d) is formed by the free end of the spacer (46) provided with a thread and a lock nut.

33. Roof-and-floor system according to either or all of the claims hereinbefore referred to, wherein a height-adjusting device is arranged between the locking member (3,4) and the spacer (46) and/or the spacer (46) and the fastener (13,13a-e).

34. Roof-and-floor system according to either or all of the claims hereinbefore referred to, wherein the locking member (3a,4a,4d) is constituted of at least two plates or locking sections (81,82,91, 92, 171,172,173) that can relatively be adjusted one with regard to another and the overall length in common of which can be adjusted, especially by displacement or rotation one against another, to a value smaller than the clearance between two undercuts, cogs or retaining means (7,8,7a,8a) arranged in an adjacent position on the sectional flanks (5,6) or in the groove (64) of the floor member (1,2), and wherein the locking member (3a,4a,4d) can be inserted - through the clearance between undercuts, cogs or retaining means (7,8,7a,8a) - into the floor member (1,2) as much as is necessary to have it project right above or below said undercuts, cogs or retaining means (7,8,7a,8a) thus enabling at least part of the locking sections (81,82,91, 92,171,172,173), especially by displacing or rotating same one against another, to engage behind the undercuts, cogs or retaining means (7,8,7a,8a) of the floor member (1).

35. Roof-and-floor system according to either or all of the claims hereinbefore referred to, wherein the locking sections (81,82) are formed by two single plates arranged in such a way as to enable their being slid one on another into a sandwich position and their being screwed or faced one with another in such position.

36. Roof-and-floor system according to either or all of the claims hereinbefore referred to, wherein the locking sections (91,92) are formed by two sectional parts that can be fitted into each other and that can be screwed or fixed one with another in such fitted position.

37. Roof-and-floor system according to either or all of the claims hereinbefore referred to, wherein the sectional parts forming the locking sections (91,92) have a substantially U-shaped cross section.

38. Roof-and-floor system according to either or all of the claims hereinbefore referred to, wherein an oblong hole (84) is provided in at least one of the locking sections (81,91).

39. Roof-and-floor system according to either or all of the claims hereinbefore referred to, wherein a denticulation is applied to the long flanks of the oblong hole (84).

40. Roof-and-floor system according to either or all of the claims hereinbefore referred to, wherein the locking member (4d) has at least one safety catch (171,172) that can be pulled back - under the effect of counterpressure exerted by at least one spring (174,175) - into an orthogonal position with regard to the vertical axis of the locking member (4d) until a value for the overall length in common of the locking member (4d) and the safety catch (171,172) is obtained that is smaller than the clearance between two adjacent undercuts, cogs or retaining means (7,8,7a,8a) provided in the sectional flanks (5,6) of the floor member (1), wherein the locking member (4d) can be inserted through the clearance between the undercuts, cogs or retaining means (7,8,7a,8a) into the floor member (1), and wherein at least part of the locking member (4d) and/or the safety catch (171,172) engages behind the undercuts, cogs or retaining means (7,8,7a,8a) of the floor member (1) upon discontinuance of the pull-back force.

41. Roof-and-floor system according to either or all of the claims hereinbefore referred to, wherein the locking member (4d) is provided in the form of a hollow body (173) with the safety catch or catches (171,172) being arranged inside the locking member (4d).

42. Roof-and-floor system according to either or all of the claims hereinbefore referred to, wherein the locking member (4d) has at least one opening (173c,173d) applied to at least one of its front ends (173a,173b) when the latter are arranged in parallel with the sectional flanks (5,6) or the groove internal walls of the floor member (1).

43. Roof-and-floor system according to either or all of the claims hereinbefore referred to, wherein at least one safety catch (171,171) is inserted into at least one of the front-end openings (173c,173d) of the locking member (4d) with at least one spring (174,175) resting against the internal front surface (173e,173f) arranged in parallel with the opening (173c.173d).

44. Roof-and-floor system according to either or all of the claims hereinbefore referred to, wherein at least one slotted opening (173h, 173i) is provided at the bottom (173g) of the locking member (4d), with the safety catch (171,172) being equipped with a matching receiving device adjacent thereto, and wherein a grip-type lever (177,178) attached to the receiving device passes through the slotted opening (173h,173i) and bears out from the bottom (173g) of the locking member (4d).

45. Roof-and-floor system according to either or all of the claims hereinbefore referred to, wherein the receiving device (173k,173l of the safety catch has the form of a threaded hole.

46. Roof-and-floor system according to either or all of the claims hereinbefore referred to, wherein the slotted opening (173h,173i) is dosed at its front ends.

47. Roof-and-floor system according to either or all of the claims hereinbefore referred to, wherein the grip-type lever (177,178) has the form of a set screw.

48. Roof-and-floor system according to either or all of the claims hereinbefore referred to, wherein at least one sleeve or bolt (173m) is applied to internal front surface (173,173f) of the safety catch (171,172) suited to receive a spring.

49. Roof-and-floor system according to either or all of the claims hereinbefore referred to, wherein the locking member (4e) has at least one locking bar (184,185) engaging behind the undercuts, cogs or retaining means (7,8,7a,8a) of the floor member (1) that can be moved into a locking position and fastened by means of a relative linear motion with regard to the locking member (4e).

50. Roof-and-floor system according to either or all of the claims hereinbefore referred to, wherein the locking bar (184,185) has the form of a toothed rack that can be extended beyond one the front ends (125,126) of the locking member (4e) and that is linked in an active connection to a set wheel (138) accessible from the bottom side of the locking member.

51. Roof-and-floor system according to either or all of the claims hereinbefore referred to, wherein the spacer (46) is provided with a pressing head (140,140a,140b) mounted on the front cone (55) directed towards, and next to, the retaining means (7,8,7a,8a).

52. Roof-and-floor system according to either or all of the claims hereinbefore referred to, wherein the pressing head (140,140a,140b) has, at least in part, the surface structure of the internal face of the vertex of the sheet metal (53) or of the vertex of the groove of the floor member (1).

53. Roof-and-floor system according to either or all of the claims hereinbefore referred to, wherein the pressing head (140,140a,140b) can be rotated horizontally with regard to the spacer (46).

54. Roof-and-floor system according to either or all of the claims hereinbefore referred to, wherein the pressing head (140,140a,140b) is attached onto a ball pivot (138) of the spacer (46).

55. Roof-and-floor system according to either or all of the claims hereinbefore referred to, wherein the pressing head (140,140a,140b) is constituted of plastic, a rubber material or a metal material.

56. Roof-and-floor system according to either or all of the claims hereinbefore referred to, wherein a torsional-strength positive-locking joint can be produced between the pressing head (140,140a,140b) and the vertex of the metal sheet (53), with a turn-lock being provided between the pressing head (140,140a,140b) and the locking member (4b).

57. Roof-and-floor system according to either or all of the claims hereinbefore referred to, wherein the turn-lock arranged between the pressing head and the locking member is constituted of at least one apron (145), with such apron being mounted onto the pressing head (140,140a,140b) and encompassing at least part of the locking member (4b).

58. Roof-and-floor system according to either or all of the claims hereinbefore referred to, wherein the turn-lock arranged between the pressing head (140b) and the locking member (4b) is constituted of locking pins (146,147) mounted onto the pressing head and guided in bores (148,149) provided in the locking member (4b).

59. Roof-and-floor system according to either or all of the claims hereinbefore referred to, wherein the pressing head is a plate.

60. Roof-and-floor system according to either or all of the claims hereinbefore referred to, wherein the turn-lock (140a) is a shaped part.

61. Roof-and-floor system according to either or all of the claims hereinbefore referred to, wherein the plate (153) is a batten extending in the longitudinal direction of the knuckle or across at least two deep knuckles of the floor member (1) provided in the form of a clamping or locking roofing sectional sheet.

62. Roof-and-floor system according to either or all of the claims hereinbefore referred to, wherein the retaining sections (151,152) are arranged at the underside of the plate or at the edge of the plate at a spacing equal to that of the knuckles of the floor member (1).

63. Roof-and-floor system according to either or all of the claims hereinbefore referred to, wherein the locking member (3b) provided in the form of a clamping lug has a chucking element (155) projecting into the deep knuckle of the floor member (1) and allowed to either rest on the knuckle bottom (159) or to be wedged between the sectional flanks (5,6) of the floor member (1).

64. Roof-and-floor system according to either or all of the claims hereinbefore referred to, wherein the plate (153) has a threaded connection piece (156a) on its bottom side, i.e. the side directed towards the deep knuckle, as well as a threaded channel (156) that is open in the direction of the plate top side, and wherein the chucking element (155) is a threaded rod provided with a screw end (155a) on one side and with a pressure plate (155b) on the other, with the screw end (155a) being received - in a height-adjustable junction - by the threaded connection piece (156a) of the plate (153).

65. Roof-and-floor system according to either or all of the claims hereinbefore referred to, wherein the plate (153,167,167a) of the locking member (3b,3c,3d) has such retaining sections or retaining elements which, by pressing the plate into the knuckle (9) of the floor member (1), can be moved into a locking position with regard to the undercuts, cogs or retaining means (7,8) of the floor member (1).

66. Roof-and-floor system according to either or all of the claims hereinbefore referred to, wherein the plate (167) of the locking member (3c) - on the edge sides directed towards, and next to, the retaining means (7,8) of the floor member (1) - is equipped with rands (165,166) that encompass, at least in part, the retaining means (7,8).

67. Roof-and-floor system according to either or all of the claims hereinbefore referred to, wherein the locking member (3d) provided in the form of a clamping lug has a substantially trapezoidal cross section and - by way of expanding the knuckle opening and displacing the undercuts, cogs or retaining means (7,8) - can be pressed through the knuckle opening into the deep knuckle (9) of the floor member (1) and moved into a position below the undercuts, cogs or retaining means (7,8) previously sprung back into their home position, with at least a section of its front ends resting against the knuckle flanks (5,6).

68. Roof-and-floor system according to either or all of the claims hereinbefore referred to, wherein a shearing protection (190) is applied between each of the several floor members (1) provided in the form of clamping or locking roofing sectional sheets.

69. Roof-and-floor system according to either or all of the claims hereinbefore referred to, wherein at least the long edge sides of the floor member (1) have the form of a hooked edge.

70. Roof-and-floor system according to either or all of the claims hereinbefore referred to, wherein pockets constituted by the undercuts, cogs or retaining means (7,8) have a sloped surface (191) ascending in the direction of the knuckle or groove centre.

71. Roof-and-floor system according to either or all of the claims hereinbefore referred to, wherein at least one clamping jaw is inserted into the knuckles.

72. Roof-and-floor system according to either or all of the claims hereinbefore referred to, wherein the floor member (1) is constituted by way of deformation of a trapezoidal sectional sheeting the sectional wall of which is transformed, in the desired sections, into undercuts, cogs or retaining means (7,8).

73. Roof-and-floor system according to either or all of the claims hereinbefore referred to, wherein the floor member (1) forms a permanent shuttering.

## Revendications

1. Système de toit et de plancher pour bâtiments à toit plat dont la surface de toit est formée de préférence par des éléments de plancher (1), et plus particulièrement sous forme de tôles en profilé trapézoïdal ou sous une forme similaire, qui, de côté extérieur du bâtiment, peuvent être recouverts par des matériaux isolants (49) et par des lés d'étanchéité (50) pouvant être fixés de préférence par des moyens mécaniques et/ou qui consentent, sur la face inférieure du plancher dirigée vers l'intérieur du bâtiment, la fixation de constructions et installations de préférence suspendues, et plus particulièrement de faux-plafonds, tuyaux, gaines pour câbles, éclairages, signalisations ou similaires, le système de toit et de plancher se composant d'un élément de plancher (1) au moins et d'un élément de verrouillage (3,3a,3b,3c,3d,4,4a,4b,4d,4e) au moins, ce dernier pouvant être relié sans vis avec l'élément de plancher (1), cet élément de plancher (1 ) étant une tôle de toiture en profilé à assemblage par serrage et verrouillage pourvue dans sa paroi en profilé de contre-dépouilles, tenons ou moyens de retenue (7,8) qui sont accessibles à partir de la face intérieure du bâtiment aussi bien qu'à partir de la face extérieure du bâtiment et qui consentent l'engagement positif de derrière de l'élément de verrouillage (3,3a,3b,3c,3d,4,4a,4b,4d,4e) à être inséré dans l'élément de plancher (1), **caractérisé en ce que** l'élément de verrouillage (3,3a,3b,3c,3d), en vue du montage par l'extérieur du toit a la forme d'une plaquette de serrage est pourvue, en vue du montage de matériaux isolants et d'étanchéité (49,50) sur le toit plat, au moins d'une plaque (14,81,82,153,167,167a) saisissable par une vis (11 ) de l'élément de fixation (12), sur laquelle sont disposés les sections de retenue (29,30,87,88,151,152,161,162,161a,162a) s'engageant de derrière dans les contre-dépouilles, tenons ou moyens de retenue (7,8) de l'élément de plancher (1) sous forme de tôle de toiture en profilé à assemblage par serrage et verrouillage et pouvant être amenées dans une position de verrouillage par rapport aux contre-dépouilles, tenons ou moyens de retenue (7,8), et **en ce que** les contre-dépouilles, tenons ou moyens de retenue (7,8) sont disposés à proximité du sommet de la moulure (53) de l'élément de plancher (1).

2. Système de toit et de plancher selon la revendication 1 **caractérisé en ce que** l'élément de plancher (1) consists essentiellement en une tôle en profilé trapézoidal présentant des moulures élevées et profondes (10,9) disposées en parallèle, dans les flancs profilés (5,6) de laquelle sont moulés les contre-dépouilles, tenons ou moyens de retenue (7,8) s'étendant dans le sens longitudinal des moulures.

3. Systéme de toit et de plancher selon l'une ou l'autre des revendications 1 et 2 **caractérisé en ce que** chacune des contre-dépouilles et chacun des tenons ou moyens de retenue (7,8) forment une poche (31 ) dans la zone de la moulure élevée (10) et une niche (32) dans la zone de la moulure profonde (9), deux poches (31 ) voisines disposées en parallèle dans une moulure ou deux niches (32) voisines disposées en parallèle dans une moulure formant une paire de moyen de retenue pour au moins un élément de verrouillage (3,3a,3b,3c,3d,4,4a,4b,4d,4e) pouvant être inséré dans la moulure concernée et s'engageant de derrière dans cette paire.

4. Système de toit et de plancher selon l'une ou l'autre des revendications 1 à 3 **caractérisé en ce que** les contre-dépouilles, tenons ou moyens de retenue (7,8) débordent ou font saillie au-delà des flancs profilés (5,6), et ceci dans la direction du centre de moulure.

5. Système de toit et de plancher selon l'une ou l'autre des revendications précédentes **caractérisé en ce que** l'élément de verrouillage (3,3a,3b, 3c,3d et/ou 4,4a,4b,4d,4e) peut être clavetté ou coincé dans la moulure (9,10) ou dans la rainure (64) de l'élément de plancher (1).

6. Système de toit et de plancher selon l'une ou l'autre des revendications précédentes **caractérisé en ce que** l'élément de verrouillage (3 et/ou 4,4b,4e) peut être pivoté dans la moulure (9,10) ou dans la rainure (64) de l'élément de plancher (1).

7. Système de toit et de plancher selon l'une ou l'autre des revendications précédentes **caractérise en ce que** l'élément de verrouillage (3a et/ou 4a,4d,4e) peut s'étendre dans la moulure (9,10) ou dans la rainure (64) de l'élément de plancher (1).

8. Système de toit et de plancher selon l'une ou l'autre des revendications précédentes **caractérisé en ce que** l'élément de verrouillage (3,3a,3b, 3c,3d,4,4a,4b,4d,4e) est pourvu de sections de retenue (29,30)(56,57) (87,88)(97,98)(105,106)(151,152)(161,162)(181,182)(186,187) s'engageant de derrière dans les contre-dépouilles, tenons ou moyens de retenue (7,7a,8,8a) de l'élément de plancher (1) et pouvant être amenées - par ajustage, rotation, décalage ou clipsage par rapport aux contre-dépouilles, tenons ou moyens de retenue (7,7a,8,8a) - à une position de verrouillage.

9. Système de toit et de plancher selon l'une ou l'autre des revendications précédentes **caractérisé en ce que** les sections de retenue (29,30) (56,57)(87,88)(97,96)(105,106)(151,152)(161,182)(1,187) forment une seule pièce avec l'élément de verrouillage (3,3a,3b, 3c,3d,4,4a,4b, 4d,4e).

10. Système de toit et de plancher selon l'une ou l'autre des revendications précédentes **caractérisé en ce que** les sections de retenue (29,30) (56,57)(87,86)(97,98)(105,106) ont la forme de colliers ou listeaux montés sur les faces de l'élément de verrouillage (3,3a,4,4a,4b,4e).

11. Système de toit et de plancher selon l'une ou l'autre des revendications précédentes **caractérisé en ce que** les sections de retenue (151,152) (161,162) ont la forme de languettes à ressort

12. Système de toit et de plancher selon l'une ou l'autre des revendications précédentes **caractérisé en ce que** l'élément de verrouillage (3,3a,3b, 3c,3d,4,4a,4b,4d,4e) est pourvu de sections de retenue (29,30)(56,57) (87,88)(97,98)(105,106)(151,152)(161,162)(181,182)(186,187) pouvant être amenées à une position de verrouillage, soit par décalage par rapport à l'élément de verrouillage soit par décalage de l'ensemble ou d'une partie de l'élément de verrouillage (3,3a,3b, 3c,3d,4,4a,4b,4d,4e) même par rapport aux contre-dépouilles, tenons ou moyens de retenue (7,8,7a,8a) de l'élément de plancher (1).

13. Système de toit et de plancher selon l'une ou l'autre des revendications précédentes **caractérisé en ce que** l'élément de verrouillage (3,4,4b) a la forme d'une plaque indivisée (14,34,34a), les sections de retenue (29,30)(56,57)(105,106)(186,187) étant formées par les secteurs de bord frontal de la plaque (14,34,34a) et pouvant être amenées - par rotation de la plaque (14,34,34a) par rapport aux contre-dépouilles, tenons ou moyens de retenue (7,8,7a,8a) de l'élément de plancher (1) - à une position de verrouillage.

14. Système de toit et de plancher selon l'une ou l'autre des revendications précédentes **caractérisé en ce que** l'élément de verrouillage (3,4,4b,4e) a essentiellement une forme rectangulaire ou ovale consentant l'insertion - en passant entre les contre-dépouilles, tenons ou moyens de retenue (7,8,7a,8a), dans l'élément de plancher (1) jusqu'au-dessus ou au-dessous des contre-dépouilles, tenons ou moyens de retenue (7,8,7a, 8a) - dans l'éléme de plancher (1) et la rotation, avec ses sections de retenue (29,30)(56,57)(105,106)(186,187), par son propre axe vertical (28,54,55a,110) jusqu'à engagement de derrière dans les contre-dépouilles, tenons ou moyens de retenue (7,8,7a,8a), l'élément de verrouillage (3,4,4b,4e) présentant des petits côtés (15,16)(35,36)(35a,35b) (119,120) et des grands côtés (17,18)(37,38)(37a,38a)(121,122) et les petits côtés (15,16)(35,36)(35a,35b)(119,120) étant dimensionnés plus petits, et les grands côtés (17,18)(37,38)(37a,38a)(121,122) plus grands, que l'écartement entre deux contre-dépouilles, tenons ou moyens de retenue (7,8,7a,8a) voisinés de l'élément de plancher (1).

15. Système de toit et de plancher selon l'une ou l'autre des revendications précédentes **caractérisé en ce que** deux zones d'angle diagonalement voisinées de l'élément de verrouillage (3,4,4b,4e) sont munies d'un rayon (21 ,22)(41 ,42)(41a,42a)(117,118) chacune et les deux autres zones d'angle diagonalement voisinées d'une arête pointue chacune (19,20)(39,40)(39a,40a)(136,137), la disposition des zones d'angle munies de rayons (21 ,22)(41 ,42)(41a,42a)(117,118) et d'arêtes pointues (19,20)(39,40)(39a,40a)(136,137) étant choisie de façon telle que les zones d'angle, compte tenu du sens de rotation horizontal de l'élément de verrouillage (3,4,4b,4e), déplacées en premier vers l'une ou l'autre des contre-dépouilles ou vers l'un ou l'autre des tenons ou moyens de retenue (7,8,7a,8a) de l'élément de plancher (1) soient conçues sous forme arrondie.

16. Système de toit et de plancher selon l'une ou l'autre des revendications précédentes **caractérisé en ce que** les grands côtés (17,18)(37,38) (37a,38a)(121,122) de l'élément de verrouiftage (3,4,4b,4e) présentent une légère surmesure par rapport au diamétre intérieur de la moulure (9,10) ou de la rainure (64) de l'élément de plancher (1).

17. Système de toit et de plancher selon l'une ou l'autre des revendications précédentes **caractérisé en ce que** l'élément de verrouillage (3,4,4b) a une forme en écart de la planéité.

18. Systéme de toit et de plancher selon l'une ou l'autre des revendications précédentes **caractérisé en ce que** l'élément de verrouillage (3,4) a une forme en cuvette ou en coussin.

19. Système de toit et de plancher selon l'une ou l'autre des revendications précédentes **caractérisé en ce que** l'élément de verrouillage a une forme ondulée.

20. Système de toit et de plancher selon l'une ou l'autre des revendications précédentes **caractérisé en ce que** l'élément de verrouillage (3,3b,3c,4) a une forme est muni de nervures raidisseuses (25,26) ou d'entretoises (23,24).

21. Système de toit et de plancher selon l'une ou l'autre des revendications précédentes **caractérisé en ce que** l'élément de verrouillage (4,4a,4b, 4d,4e), en vue du montage côté intérieur du toit, forme la partie d'ancrage d'un élément suspendu (51,51 a-d), avec une piéce d'écartement (46) s'étendant essentiellement dans le sens vertical étant disposée au-dessous de l'élément de verrouillage (4,4a,4b,4d,4e) et munie, à son bout libre, un moyen de fixation (13) pour les constructions et installations à être disposées au-dessous de l'élément de plancher (1).

22. Systéme de toit et de plancher selon l'une ou l'autre des revendications précédentes **caractérisé en ce que** la pièce d'écartement (46) est disposée d'une façon détachable sur l'élément de verrouillage (4,4a,4b,4d, 4e).

23. Système de toit et de plancher selon l'une ou l'autre des revendications précédentes **caractérisé en ce qu'**un raccord à vis (45 ou 11,52) est inséré entre la pièce d'écartement (46) et l'élément de verrouillage (4,4a, 4b,4d,4e).

24. Système de toit et de plancher selon l'une ou l'autre des revendications précédentes **caractérisé en ce que** l'élément de verrouillage (4,4a,4b, 4d,4e) peut être pénétré par la pièce d'écartement (46), la pièce d'écartement (46) étant une tige filetée pouvant être posée, par son bout frontal (55), de sorte qu'elle saillisse du bord supérieur, c'est-à-dire du bord se trouvant près de l'élément de plancher (1), de la plaque (47) de l'élément de verrouillage (4,4a,4b, 4d,4e) concerné.

25. Systéme de toit et de plancher selon l'une ou l'autre des revendications précédentes **caractérisé en ce que** l'élément de verrouillage (4b) a un creux en auge (109) entre les sections de retenue (105,106).

26. Système de toit et de plancher selon l'une ou l'autre des revendications précédentes **caractérisé en ce que** le moyen de fixation (13,13a,13b, 13c,13e) est disposé sous forme détachable sur la pièce d'écartement (46).

27. Système de toit et de plancher selon l'une ou l'autre des revendications précédentes **caractérisé en ce que** le moyen de fixation (13) a la forme d'un collier pour tuyaux.

28. Système de toit et de plancher selon l'une ou l'autre des revendications précédentes **caractérisé en ce que** le moyen de fixation (13a) a la forme d'un caniveau de câbles ou qu'un caniveau de câbles (208) est disposé sur le moyen de fixation.

29. Système de toit et de plancher selon l'une ou l'autre des revendications précédentes **caractérisé en ce que** le moyen de fixation (13b) est conçu sous forme de plaque de montage.

30. Système de toit et de plancher selon l'une ou l'autre des revendications précédentes **caractérisé en ce que** le moyen de fixation (13c) est conçu sous forme d'écrou.

31. Système de toit et de plancher selon l'une ou l'autre des revendications précédentes **caractérisé en ce que** le bout libre de la pièce d'écartement (46) est conçu sous forme de moyen de fixation (13,13d,13e).

32. Système de toit et de plancher selon l'une ou l'autre des revendications précédentes **caractérisé en ce que** le moyen de fixation (13d) est formé par le bout libre, pourvu d'un filet et un contre-écrou, de la pièce d'écartement.

33. Système de toit et de plancher selon l'une ou l'autre des revendications précédentes **caractérisé en ce qu'**un dispositif d'ajustage de hauteur est disposé entre l'élément de verrouillage (3,4) et la pièce d'écartement (46) et/ou entre la pièce d'écartement (46) et le moyen de fixation (13, 13a-e).

34. Système de toit et de plancher selon l'une ou l'autre des revendications précédentes **caractérisé en ce que** l'élément de verrouillage (3,a,4a,4d) consiste en au moins deux plaques ou en deux pièces d'un verrou (81, 82,91,92,171,172,173) pouvant être déplacés l'une ou l'un par rapport à l'autre, dont la longueur hors tout commune peut être ajustée, en particulier par déplacement ou rotation l'une ou l'un par rapport à l'autre, de sorte qu'elle soit plus petite que l'écartement entre deux contre-dépouilles, tenons ou moyens de retenue (7,8,7a,8a) voisinés disposés dans le flancs profiles (5,6) ou la rainure (64) de l'élément de plancher (1), que l'élément de verrouillage (3a,4a,4d) peut être placé dans l'élément de plancher (1,2), tout en passant à cet effet entre et par les contre-dé pouilles, tenons ou moyens de retenue (7,8,7a,8a) jusqu'au-dessus ou au-dessous desdits contre-dépouilles, tenons ou moyens de retenue (7, 8,7a, 8a), de sorte qu'il s'engage de derrière, en particulier par décalage ou rotation de ses pièces de verrou (81,82,91,92,171,172,173) l'un par rapport à l'autre, au moins partiellement avec une partie de ses pièces de verrou (81, 82,91,92,171,172,173) dans les contre-dépouilles, tenons ou moyens de retenue (7,8,7a,8a) de l'élément de plancher (1).

35. Système de toit et de plancher selon l'une ou l'autre des revendications précédentes **caractérisé en ce que** les pièces de verrou (81,82) sont conçus sous forme de deux plaques séparées disposées d'une façon déplaçable l'une au-dessus de l'autre et vissable ou fixable l'une avec l'autre.

36. Système de toit et de plancher selon l'une ou l'autre des revendications précédentes **caractérisé en ce que** les pièces de verrou (91,92) sont conçus sous forme de deux profilés disposées d'une façon coulissant l'un dans l'autre et vissable ou fixable l'un avec l'autre.

37. Système de toit et de plancher selon l'une ou l'autre des revendications précédentes **caractérisé en ce que** les profilés formant les pièces de verrou (91,92) ont une section transversale essentiellement en U.

38. Système de toit et de plancher selon l'une ou l'autre des revendications précédentes **caractérisé en ce qu'**un trou oblong (84) est disposé, en le perçant, dans au moins un des pièces de verrou (81,91).

39. Système de toit et de plancher selon l'une ou l'autre des revendications précédentes **caractérisé en ce que** les grands flancs du trou oblong (84) ont une denture (86).

40. Système de toit et de plancher selon l'une ou l'autre des revendications précédentes **caractérisé en ce que** l'élément de verrouillage (4d) a au moins un verrou de sûreté (171,172) qui, sous l'effet de la contre-pression exercée par au moins un ressort (174,175), peut être remis en une position orthogonale à l'axe vertical de l'élément de verrouillage (4d) jusqu'à ce que la longueur hors tout commune de l'élément de verrouillage (4d) et du verrou de sûreté (171,172) soit plus petite que l'écartement entre deux contre-dépouilles, tenons ou moyens de retenue (7,8, 7a,8a) voisinés disposés dans les flancs profilés (5,6) de l'élément de plancher (1), que l'élément de verrouillage (4d) peut être placé dans l'élément de plancher (1), tout en passant à cet effet entre et par les contre-dépouilles, tenons ou moyens de retenue (7,8,7a,8a), de sorte que l'élément de verrouillage (4d) et/ou le verrou de sûreté ( 171,172) - dès cessation de la force de remise - s'engagent de derrière, au moins partiellement, dans les contre-dépouilles, tenons ou moyens de retenue (7,8,7a,8a) de l'élément de plancher (1).

41. Système de toit et de plancher selon l'une ou l'autre des revendications précédentes **caractérisé en ce que** l'élément de verrouillage (4d) a la forme d'un corps creux (173) et que le ou les verrous de sûreté (171, 172) est/sont guidé(s) à l'intérieur de l'élément de verrouillage (4d).

42. Systéme de toit et de plancher selon l'une ou l'autre des revendications précédentes **caractérisé en ce que** l'élément de verrouillage (4d) présente au moins une ouverture (173c,173d) dans un de ses bouts frontaux (173a, 173b) alignés en parallèle aux flancs profilés (5,6) ou aux parois intérieures de la rainure de l'élément de plancher (1).

43. Système de toit et de plancher selon l'une ou l'autre des revendications précédentes **caractérisé en ce qu'**au moins un verrou de sûreté (171, 172) est inséré dans au moins une des ouvertures de bout frontal (173c, 173d) de l'élément de verrouillage (4d), sur la surface frontale intérieure (173e,173f) s'étendant en parallèle à ladite ouverture (173c,173d) duquel repose au moins un ressort (174,175).

44. Système de toit et de plancher selon l'une ou l'autre des revendications précédentes **caractérisé en ce qu'**au moins une ouverture en fente (173h,173i) est disposée dans le fond (173g) de l'élément de verrouillage (4d), avec un dispositif récepteur (173k, 173l) étant voisiné au niveau du verrou de sûreté (171,172), et qu'un levier à poignée (177,178) attaché dans le dispositif récepteur passe par l'ouverture en fente (173h, 173i) en faisant saillie au-dessous du fond (173g) de l'élément de verrouillage (4d).

45. Système de toit et de plancher selon l'une ou l'autre des revendications précédentes **caractérisé en ce que** le dispositif récepteur (173k, 173l) du verrou de sûreté est conçu sous forme de trou taraudé.

46. Système de toit et de plancher selon l'une ou l'autre des revendications précédentes **caractérisé en ce que** l'ouverture en fente (173h,173i) est fermée au niveau de ses bouts frontaux

47. Système de toit et de plancher selon l'une ou l'autre des revendications précédentes **caractérisé en ce que** le levier à poignée (177,178) est conçu sous forme de vis sans tête.

48. Système de toit et de plancher selon l'une ou l'autre des revendications précédentes **caractérisé en ce que** le verrou de sûreté (171,172) porte au moins une douille ou une cheville (173m) sur sa surface frontale intérieure (173e,173f) consentant la réception du ressort.

49. Système de toit et de plancher selon l'une ou l'autre des revendications précédentes **caractérisé en ce que** l'élément de verrouillage (4e) est pourvu au moins d'un verrou (184,185) consentant l'engagement de derrière dans les contre-dépouilles, tenons ou moyens de retenue (7,8, 7a,8a) de l'élément de plancher (1) qui, par un mouvement relatif linéaire par rapport à l'élément de verrouillage (4e), peut être amené à, et arrêté dans, une position de verrouillage par rapport aux contre-dépouilles, tenons ou moyens de retenue (7,8, 7a,8a).

50. Système de toit et de plancher selon l'une ou l'autre des revendications précédentes **caractérisé en ce que** le verrou (184,185) est une crémaillère pouvant être sortie au-delà d'un des bouts frontaux (125,126) de l'élément de verrouillage (4e) et se trouvant en raccordement interatif avec une molette de réglage (138) accessible par la face inférieure de l'élément de verrouillage.

51. Système de toit et de plancher selon l'une ou l'autre des revendications précédentes **caractérisé en ce que** la pièce d'écartement (46) porte un bouton-pression (140,140a,140b) sur son bout frontal (55) dirigé vers les contre-dépouilles, tenons ou moyens de retenue (7,8, 7a,8a).

52. Système de toit et de plancher selon l'une ou l'autre des revendications précédentes **caractérisé en ce que** le bouton-pression (140,140a,140b) possède, au moins partiellement, la même structure superficielle que le côté intérieur du sommet de la tôle (53) ou du sommet de la rainure de l'élément de plancher (1).

53. Système de toit et de plancher selon l'une ou l'autre des revendications précédentes **caractérisé en ce que** le bouton-pression ( 140,140a,140b) consent la rotation relative horizontale par rapport à la pièce d'écartement (46).

54. Système de toit et de plancher selon l'une ou l'autre des revendications précédentes **caractérisé en ce que** le bouton-pression (140,140a,140b) est attaché sur un pivot sphérique (138) de la pièce d'écartement (46).

55. Système de toit et de plancher selon l'une ou l'autre des revendications précédentes **caractérisé en ce que** le bouton-pression (140,140a,140b) consiste en matière plastique, un matériau en caoutchouc ou en un matériau métallique.

56. Système de toit et de plancher selon l'une ou l'autre des revendications précédentes **caractérisé en ce qu'**un raccord à engagement positif résistant à la rotation peut être fait entre le bouton-pression (140,140a,140b) et le sommet de la tôle (53), avec un verrouillage anti-rotation étant prévu entre le bouton-pression (140,140a,140b) et l'élément de verrouillage (4b).

57. Système de toit et de plancher selon l'une ou l'autre des revendications précédentes **caractérisé en ce que** le verrouillage anti-rotation existant entre le bouton-pression et l'élément de verrouillage est conçu sous forme de tablier (145) disposé sur le bouton-pression (140,140a,140b) et enveloppant, au moins partiellement, l'élément de verrouillage (4b).

58. Système de toit et de plancher selon l'une ou l'autre des revendications précédentes **caractérisé en ce que** le verrouillage anti-rotation existant entre le bouton-pression (140b) et l'élément de verrouillage (4b) est conçu sous forme de broches à déclic (146,147) disposées sur le bouton-pression et guidées dans des alésages (148,149) de l'élément de verrouillage (4b).

59. Système de toit et de plancher selon l'une ou l'autre des revendications précédentes **caractérisé en ce que** le bouton-pression est une plaque.

60. Système de toit et de plancher selon l'une ou l'autre des revendications précédentes **caractérisé en ce que** le bouton-pression (140a) est une pièce façonnée.

61. Système de toit et de plancher selon l'une ou l'autre des revendications précédentes **caractérisé en ce que** la plaque (153) est un listeau s'étendant dans le sens longitudinal de la moulure ou perpendiculairement le long d'au moins deux moulures profondes de l'élément de plancher (1) conçu sous forme d'une tôle de toiture en profilé à assemblage par serrage et verrouillage.

62. Système de toit et de plancher selon l'une ou l'autre des revendications précédentes **caractérisé en ce que** les sections de retenue (151,152) sont disposées sur la face inférieure de la plaque ou sur le bord de la plaque, et ceci en fonction de l'écartement des moulures de l'élément de plancher (1).

63. Système de toit et de plancher selon l'une ou l'autre des revendications précédentes **caractérisé en ce que** l'élément de verrouillage (3b) conçu sous forme de plaquette de serrage porte un élément de serrage (155) entrant dans la moulure profonde de l'élément de plancher (1) et pouvant reposer sur le fond de la moulure (159) ou pouvant être coincé à l'aide de clavettes entre les flancs profilés de l'élément de plancher (1).

64. Système de toit et de plancher selon l'une ou l'autre des revendications précédentes **caractérisé en ce que** la plaque (153) présente une tubulure filetée (156a) sur sa face inférieure dirigée vers la moulure profonde, cette tubulure filetée (156a) étant pourvue d'un conduit taraudé ouvert de côté face supérieure de la plaque, et **en ce que** l'élément de serrage (155) est conçu sous forme de tige filetée pourvue d'une tête à vis (155a), d'un côté, et d'une plaque d'appui (155b), de l'autre, la tête à vis (155a) de la tige filetée entrant dans la tubulure filetée (156a) de la plaque (153) tout en consentant ainsi le réglage en hauteur de ladite tige filetée.

65. Système de toit et de plancher selon l'une ou l'autre des revendications précédentes **caractérisé en ce que** la plaque (153,167,167a) de l'élément de verrouillage (3b,3c,3d) est pourvue de sections de retenue ou d'éléments de retenue qui, par enfoncement de la plaque dans la moulure (9) de l'élément de plancher (1), peuvent être amenés à une position de verrouillage par rapport aux contre-dépouilles, tenons ou moyens de retenue (7,8) de l'élément de plancher (1).

66. Système de toit et de plancher selon l'une ou l'autre des revendications précédentes **caractérisé en ce que** la plaque (167) de l'élément de verrouillage (3c) est pourvue de bourrelets (165,166) qui, par leurs bords dirigés vers les moyens de retenue (7,8) de l'élément de plancher (1), permettent d'envelopper, au moins partiellement, lesdits moyens de retenue (7,8).

67. Système de toit et de plancher selon l'une ou l'autre des revendications précédentes **caractérisé en ce que** l'élément de verrouillage (3d) conçu sous forme plaquette de serrage a une section transversale essentiellement trapézoïdale, qu'il peut étre enfoncé - par élargissement de l'ouverture de la moulure et refoulement des contre-dépouilles, tenons ou moyens de retenue (7,8) - à travers l'ouverture de la moulure dans la moulure profonde (9) de l'élément de plancher (1), qu'il peut être amené à une position au-dessous des contre-dépouilles, tenons ou moyens de retenue (7,8) préalablement revenus élastiquement à leur position de repos, et qu'il repose, au moins par une partie de ses bouts frontaux, sur les flancs de moulure (5,6).

68. Système de toit et de plancher selon l'une ou l'autre des revendications précédentes **caractérisé en ce qu'**une protection anti-poussée (190) est prévue entre les éléments de plancher (1) conçus sous forme de tôles de toiture en profilé à assemblage par serrage et verrouillage.

69. Système de toit et de plancher selon l'une ou l'autre des revendications précédentes **caractérisé en ce qu'**au moins les grands bords de l'élément de plancher (1) sont conçus sous forme de bords à crochets.

70. Système de toit et de plancher selon l'une ou l'autre des revendications précédentes **caractérisé en ce que** les poches formées par les contre-dépouilles, tenons ou moyens de retenue (7,8) sont conçues sous forme de surface en déclivité (191) remontant dans la direction du centre de la moulure ou rainure.

71. Système de toit et de plancher selon l'une ou l'autre des revendications précédentes **caractérisé en ce qu'**au moins une griffe de serrage est placée dans les moulures.

72. Système de toit et de plancher selon l'une ou l'autre des revendications précédentes **caractérisé en ce que** l'élément de plancher (1) est formé par déformation d'une tôle en profilé trapézoïdal dont la paroi profilée est transformée par déformation, aux endroits souhaités, en contre-dépouilles, tenons ou moyens de retenue (7,8).

73. Système de toit et de plancher selon l'une ou l'autre des revendications précédentes **caractérisé en ce que** l'élément de plancher (1) forme un coffrage perdu.
